# EUROPEAN PATENT APPLICATION

(11) **EP 2 410 422 A1**
(43) Date of publication of application: **25.01.2012**
(21) Application number: 10766804.8
(22) Date of filing: 14.04.2010
(51) Int. Cl.: G06F 3/153, G06F 13/00, G06F 15/00

(54) **SERVER DEVICE, SERVER-CLIENT SYSTEM, SERVER PROGRAM, AND RECORDING MEDIUM WITH SAME RECORDED THEREON**

(30) Priority: 21.04.2009 JP 2009103011; 01.05.2009 JP 2009112168
(71) Applicant: Digital Electronics Corporation, Osaka-shi Osaka 559-0031 (JP)
(72) Inventor: Yoshida, Minoru, Osaka-shi Osaka 559-0031 (JP); Tanaka, Hideki, Osaka-shi Osaka 559-0031 (JP)
(74) Representative: Cabinet Plasseraud
(86) International application number: PCT/JP2010/002703
(87) International publication number: WO 2010/122741

(57) **Abstract**

In order to limit a range of an application program operable via a client device and to allow a desired application program to be operated via the client device without affecting the application program whose image is being displayed by a server device, a server computer (1a) reads out, upon receiving a request from a client computer (2a), a quadrangle region of image data of the designated application program from a client loading region (131) according to an application designation number and quadrangle range data set in a setting file (SF1), and transmits the quadrangle region to the client computer (2a). Via the client computer (2a), the application program can be operated within the quadrangle region. The client loading region (131) for loading image data for the client computer (2a) is independent from a server loading region (121) for loading image data to be displayed on a display (14).

## Description

### Technical Field

The present invention relates to a server device, a server-client system allowing an application program of a server device connected with a network to be operated via a client device connected with the network, a server program, and a storage medium storing the program.

Further, the present invention relates to a server-client system including a client device connected with a server device via a network such as Ethernet (Registered Trademark), and particularly to a server-client system having a minimum necessary function.

### Background Art

As a remote operation software for remotely operating a computer remotely located on a network, there has been known a VNC (Virtual Network Computing), for example. Since the VNC has been developed as software which is not dependent on a platform, clients (terminals) in which the VNC is installed can communicate with each other independently of the types of their platforms such as OS.

In some information systems used in, e.g., companies, a computer (client) used by an individual has minimum necessary functions, and resources such as application programs are administered by a server. In such a system, each computer uses an application program of the server via the VNC.

According to the VNC, an image displayed by a server device is transmitted to a client device, and the client device displays the image thus received. Then, it is possible to operate the server device via the image displayed by the client device, if necessary.

Patent Literature 1 describes a system according which a client device can display part of an image displayed by a server, preferably, a certain application program. According to this system, information (window and control information) of an application program displayed by the server device is transmitted to the client device which is made of a communication terminal device, and the information thus transmitted is reconfigured by the client device so that the information suits a screen of the client device. Consequently, the client device can also display the information which is displayed by the server device.

Patent Literature 2 describes a configuration in which (i) an operation screen of an application program which is executed by a server device is decomposed into display elements and recognized, and (ii) a client device made of an information terminal device displays the individual display element or a combination of the display elements so as to allow a user to operate the application program.

Patent Literature 3 describes a configuration in which, according to a switching instruction from a transmitting device (client device), a video signal being to be outputted from an application of a receiving terminal device (server device) is switched from one to another.

Further, in recent years, in order to reduce cost of a system and to improve security of the system, a thin client system has been introduced. According to the thin client system, a client computer is provided with minimum functions, and a server computer executes an application program. Further, according to the thin client system, the server computer executes the application program in accordance with an instruction from the client computer. The client computer displays an execution image of the application program transferred from the server computer, and controls execution of the application program according to an input operation carried out via a mouse, a keyboard, a touch panel, or the like (see, e.g., Patent Literature 4). Thus, the thin client system includes the client computer connected with the keyboard, the mouse, etc. so as to virtualize an input entered via the keyboard or the mouse. Further, in a case where an input operation is carried out via the touch panel, the server computer emulates coordinates of the input entered via the touch panel, and recognizes the input as the one entered via the mouse.

Patent Literature 5 discloses the following technique. In a configuration in which a server computer is to execute an application program in response to a request from a client computer, a function of a function key of the client computer is set so as to be associated with the application program which is to be executed. Further, according to Patent Literature 5, a web page screen displaying a function key is transmitted to the client computer, so as to allow the client computer to display an image of the function key.

### Citation List

### Patent Literatures

Patent Literature 1
   Japanese Patent Application Publication (Translation of PCT Application), Tokuhyo, No. 2009-500763 A (Publication Date: January 8, 2009)
Patent Literature 2
   Japanese Patent Application Publication, Tokukai, No. 2007-11531 A (Publication Date: January 18, 2007)
Patent Literature 3
   Japanese Patent Application Publication, Tokukai, No. 2004-259263 A (Publication Date: September 16, 2004)
Patent Literature 4
   Japanese Patent Application Publication, Tokukai, No. 2007-272770 A (Publication Date: October 18, 2007)
Patent Literature 5
   Japanese Patent Application Publication, Tokukai, No. 2001-331404 A (Publication Date: November 30, 2001)

### Summary of Invention

### Technical Problem

However, in a case where the VNC is used in each of the systems described in Patent Literatures 1 through 3, data transmittable to the client device is limited to data of an application program whose image is being displayed by the server device. Therefore, while the image of that application program is being displayed by the server device, it is impossible to use any application program other than that application program via the client device. Furthermore, according to these systems, if the application program is operated via the server device and accordingly a change occurs, the change is reflected in an image of the application program which image is displayed by the client device. This impairs operability of the application program in the client device.

In a configuration in which (i) the client computer is a terminal including, as a device for input operation, only a touch panel and (ii) the client computer is configured such that characters are entered with respect to, e.g., an execution image supplied from the server computer, the client computer needs to display, on its display device, a keyboard image for character entry. Here, assume that the technique of Patent Literature 5 is applied to this configuration. This provides such a configuration in which the server computer transmits data of the keyboard image to the client computer, and then the display device of the client computer displays the keyboard image.

With such a configuration, however, every time the display device of the client computer displays the execution image for character entry, the server computer needs to transmit the keyboard image to the client computer. This increases an amount of data communicated between the server computer and the client computer, thereby increasing a load on the network.

The present invention was made in view of the foregoing problems, and an object of the present invention is to allow a client device to operate a desired application program, independently of an application program whose image is being displayed by the server device.

Another object of the present invention is to provide a server-client system including a client device which includes a touch panel serving as an input device and with which a load on a network for connection with a server device can be reduced.

### Solution to Problem

In order to attain the foregoing objects, a server device of the present invention is a server device for transmitting image data of an application program to at least one of one or more client devices in response to a request from said at least one of the one or more client devices, and accepting an instruction to operate the application program which instruction is generated by a control operation carried out via said at least one of the one or more client devices, the server device including: reading means for reading out image data of an application program from a corresponding one of a plurality of storage regions in image data storing means, the plurality of storage regions storing image data of respective different application programs; and transmitting means for transmitting the read image data to at least one of the one or more client devices which is a transmission destination, each of the plurality of storage regions being not a server storage region for storing image data used by the server device to carry out a display.

Further, in order to attain the foregoing objects, a server-client system of the present invention includes: one or more client devices; one or more server devices; and image data storing means for including a plurality of storage regions each storing at least part of image data of an application program of a corresponding one of the one or more server devices, the reading means reading out, in response to a request from at least one of the one or more client devices, image data stored in a corresponding one of the plurality of storage regions in the image data storing means.

According to each of the above server device and server-client system, when the server device receives, from the client device, a request for operation of an application program, the reading means reads out image data stored in a corresponding one of the storage regions in the image data storing means. The transmitting means transmits the read image data to the client device which is a transmission destination. Consequently, it is possible to operate, via the client device, the application program corresponding to the image data thus received.

Therefore, even while the server device is displaying image data of a certain application program, an operation carried out via the client device does not affect the application program corresponding to the image data which is being displayed by the server device, since the image data displayed by the client device is stored in a region which is not a region where the image data of the server device is stored.

The above server device is preferably configured such that: the reading means reads out the image data according to an identification code for identifying at least one of (i) the application program loaded into the corresponding one of the plurality of storage regions and (ii) the corresponding one of the plurality of storage regions; the identification code is associated with said at least one of the one or more client devices, to which the image data is to be transmitted; and the transmitting means transmits, according to the identification code, the image data to said at least one of the one or more client devices. Further, this server device may be provided in the above server-client system.

With this configuration, according to the identification code, at least one of (i) the application program stored in the corresponding one of the storage regions and (ii) the corresponding one of the storage regions is identified. This allows the image data to be read out and to be transmitted to the client device which is associated with the identification code. By providing such the identification code, it is possible to identify an application program which is to be read out, and to easily transmit the identified application program to a client device which requests operation of the application program.

The above server device preferably includes setting means for setting, as a selected range, at least part of the image data of the application program, the transmitting means transmitting the selected range to said at least one of the one or more client devices. With this, a range of image data to be transmitted to the client device is limited to the selected range. This makes it possible to limit a range of the application program in which range the application program is operable via the client device. Consequently, it is possible to easily avoid a case where the application program is improperly operated via the client device and accordingly the application program is changed into an undesirable state.

The above server-client system is configured such that: the one or more client devices are connected, via a network, with one of the one or more server devices executing an application program; and each of the one or more client devices includes: a display including a display region for displaying an image; input means for accepting an input operation carried out with respect to the image displayed; application image displaying means for (i) receiving, from the one of the one or more server devices, an execution image of the application program which is being executed by the one of the one or more server devices and (ii) displaying the execution image on the display; input processing means for transmitting, to the one of the one or more server devices according to the input operation, control information for controlling execution of the application program; a keyboard image storing section for storing a keyboard image having a predetermined keyboard layout; and keyboard image display means for (i) reading out the keyboard image from the keyboard image storing section and (ii) displaying the keyboard image on the display; and when an input operation is carried out with respect to a key of the keyboard image displayed on the display, the input processing means generates a key code corresponding to the key to which the input operation has been carried out, and transmits the generated key code to the one of the one or more server devices as the control information.

The above client device includes, as an input device, the input means (e.g., a touch panel) for accepting an input operation carried out with respect to an image displayed on the display. Further, the application image displaying means displays, on the display, an execution image of an application program which is executed by the server device, and the input processing means transmits control information to the server device according to the input operation carried out via the input means. As a result, execution of the application program is controlled. Furthermore, the keyboard image display means displays a keyboard image on the display. When an input operation is carried out with respect to a key of the keyboard image, the input processing means generates a key code corresponding to the key, and transmits the generated key code to the server device as the control information. Consequently, the server device caries out, on the application, a process according to the key code.

Here, the client device includes the keyboard image storing section for storing the keyboard image. The keyboard image display means reads out the keyboard image from the keyboard image storing section, so as to display the keyboard image on the display. Therefore, the server device does not need to transmit data of the keyboard image to the client device in order that the client device displays the keyboard image. This can reduce an amount of data communicated between the server device and the client device, as compared with a configuration in which the server device transmits the data of the keyboard image to the client device. Therefore, it is possible to provide a server-client system including a client device which includes a touch panel serving as an input device and with which a load on a network for connection with a server device can be reduced.

The above server-client system is preferably configured such that: the keyboard image storing section stores a plurality of keyboard images having respective different keyboard layouts; each of the plurality of keyboard images is associated with at least one of execution images of the application programs which are to be executed by the one or more server devices; and the keyboard image display means reads out, from the keyboard image storing section, a keyboard image among the plurality of keyboard images which is associated with an execution image of an application program which is being displayed by the application image displaying means, and displays the read keyboard image on the display.

With this configuration, the keyboard image storing section stores plural types of keyboard images. Therefore, it is possible to display, according to an execution image of an application program displayed by the display device, a keyboard image for the execution image. This allows a user to easily carry out an input operation with respect to the keyboard image.

A server program of the present invention is a server program for causing a computer to function as any of the above-described server devices, the server program causing the computer to function as each of the above means. Further, this server program is stored in a computer readable storage medium. Causing the computer to read and execute the server program in this manner provides the above server device.

Incidentally, in a case where the VNC is used, an entire image of an application program displayed by the server device is transmitted to a client device. This allows a user of the client device to operate the application program whose image is being displayed by the server device. This is convenient for the user of the client device. On the other hand, this is inconvenient for an administrator of the server device, because the user of the client device might operate an application program that the administrator does not want the user to operate. In order to eliminate such an inconvenience, it is desired to limit a range of the application program of the server device in which range the application program is operable via the client device.

This is also true for the systems described by Patent Literatures 1 through 3, by each of which a client device displays an image which is substantially the same as an image of an application program displayed by a server device.

In view of this, the above server-client system is preferably configured such that an identification code is given to at least one of the above storage region and the above application program.

With this configuration, according to the identification code, it is possible to identify and read out at least one of (i) the application program stored in the storage region and (ii) the storage region. Providing such the identification code makes it possible to identify an application program which is to be read out, and to easily transmit the application program to the client device which requests operation of the application program.

The server-client system of the present invention is preferably configured such that each of the keyboard images includes only a key necessary to execute a corresponding one of the application programs.

With this configuration, it is possible to prevent a mistake in operation caused by pressing of an unnecessary key, thereby making it possible to simplify an input operation.

### Advantageous Effects of Invention

A server device and a server-client system of the present invention are configured as described above.

Accordingly, for a server device, it is possible to prevent an operation carried out via a client device from affecting an application program corresponding to image data displayed by the server device. This provides effects of (i) improving the server device's application program maintainability and (ii) improving the client device's application program operability.

### Brief Description of Drawings

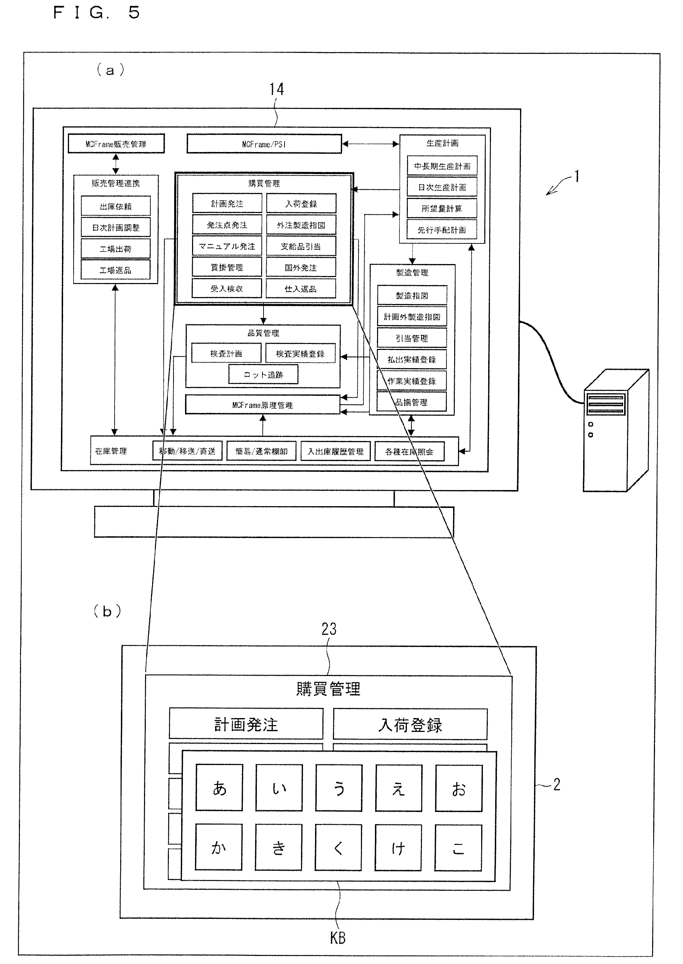

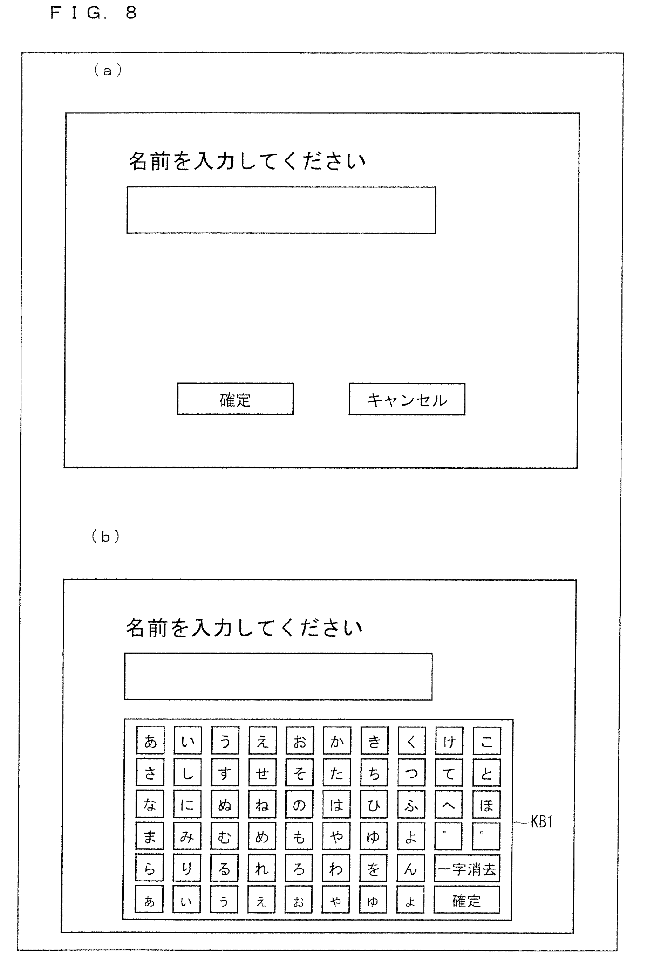

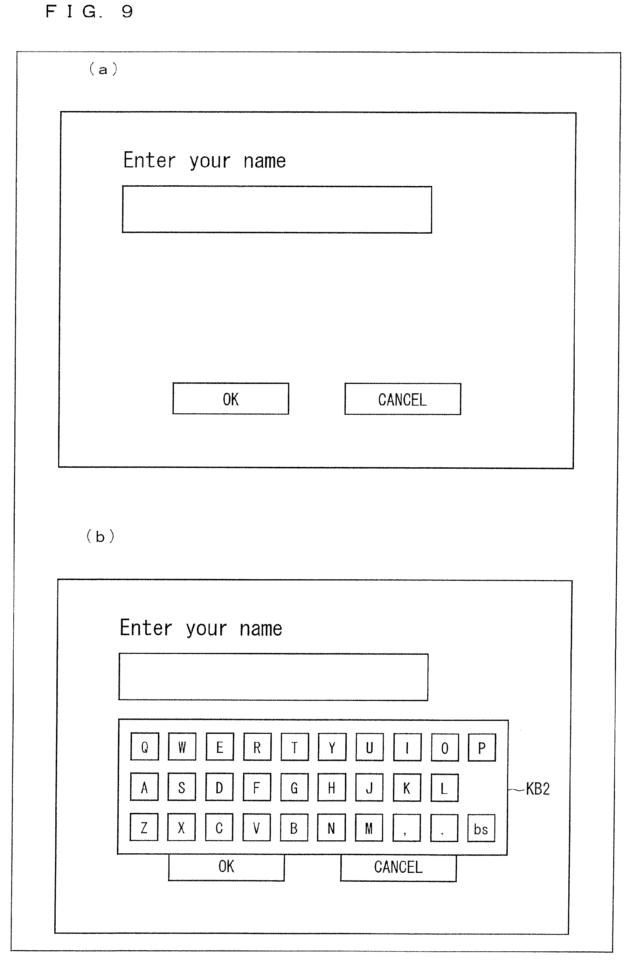

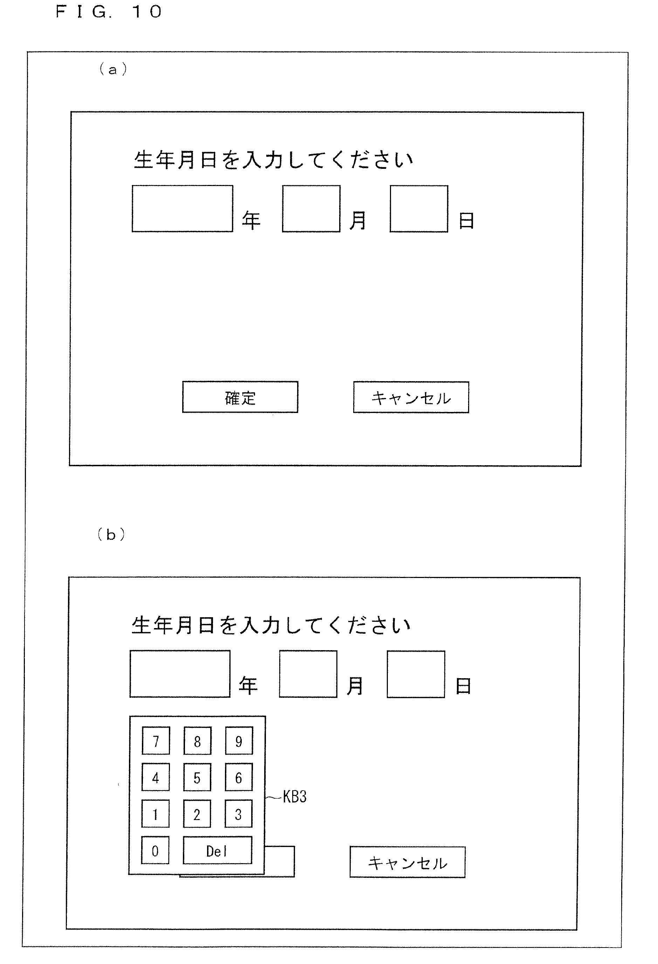

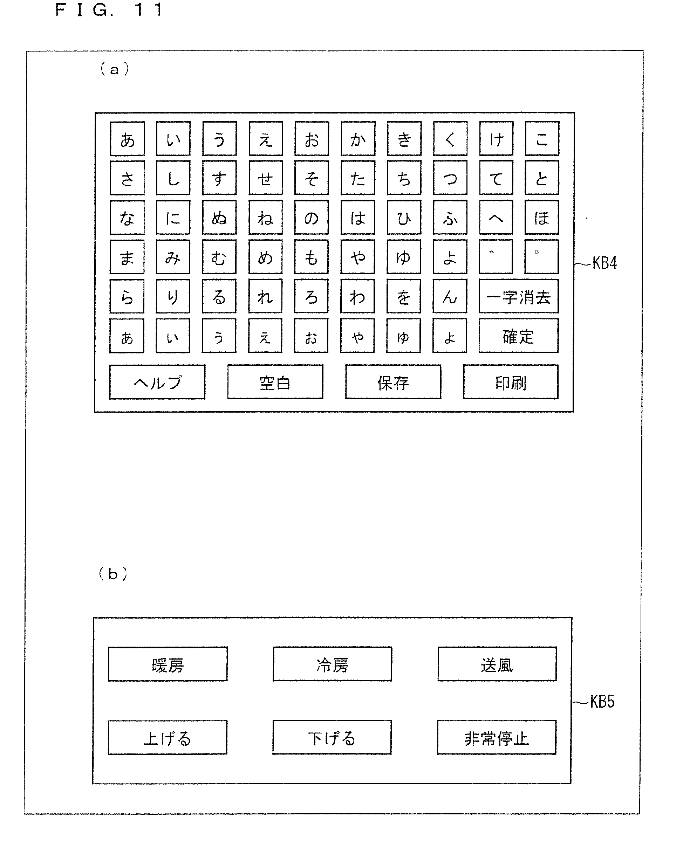

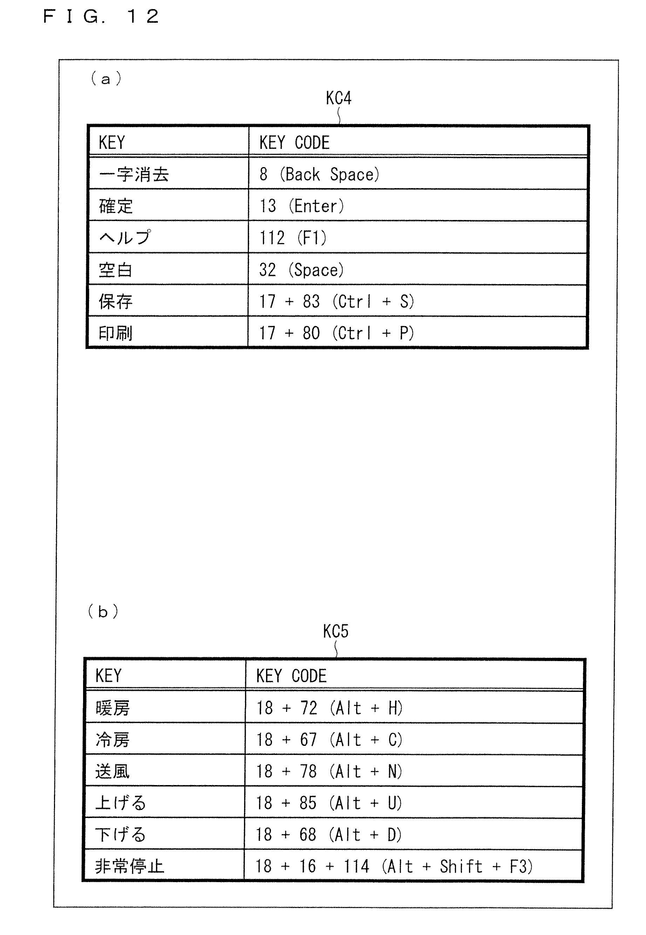

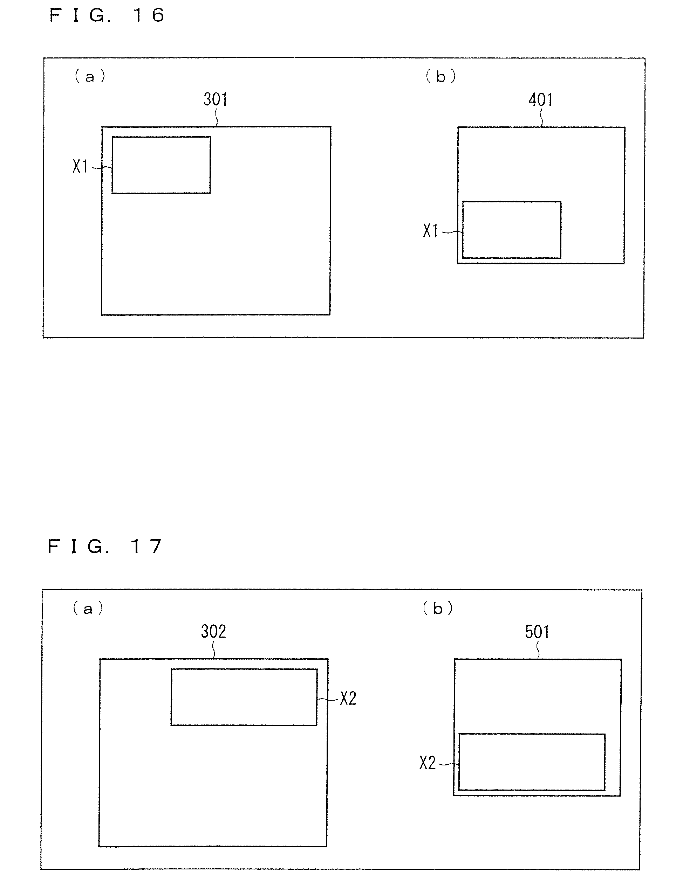

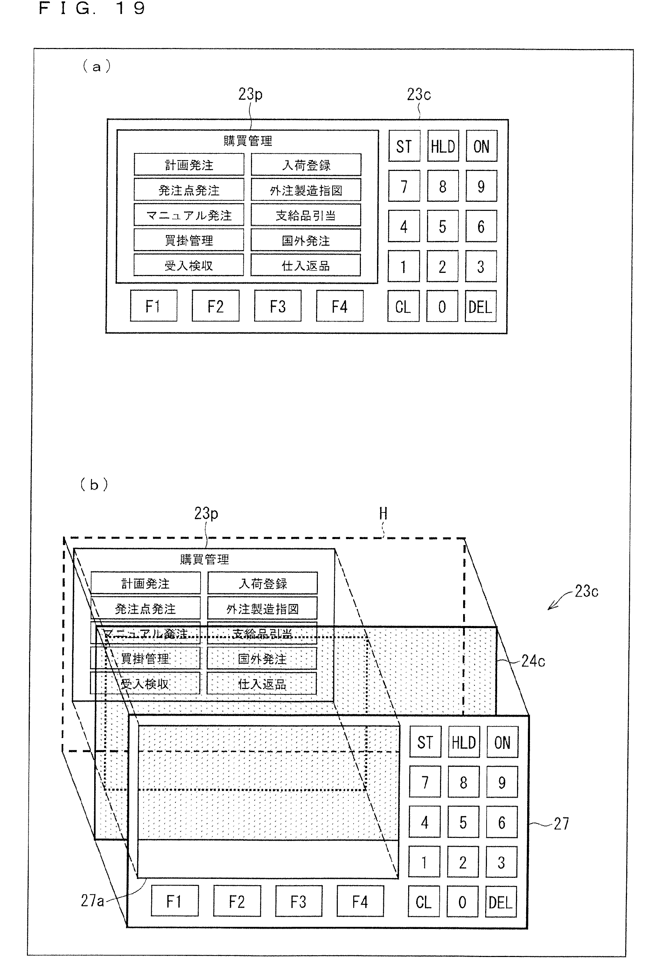

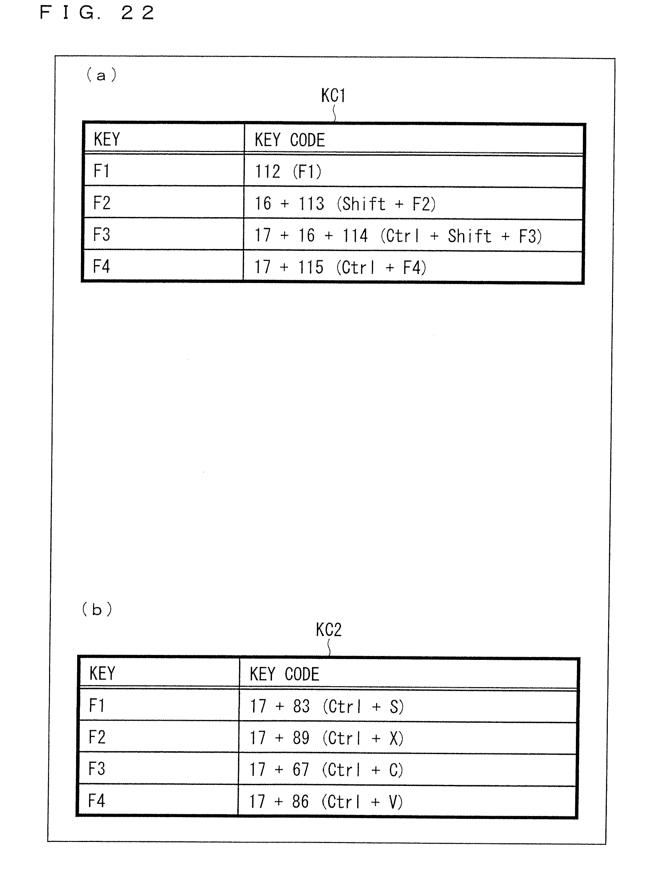

Fig. 1

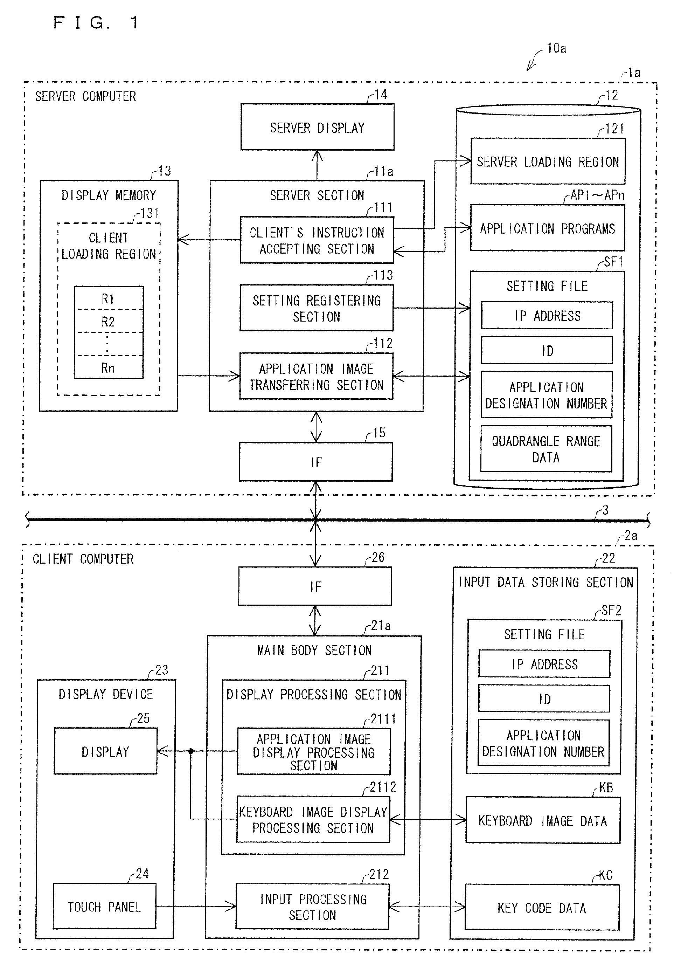

   Fig. 1 is a block diagram illustrating a configuration of a server-client system of Embodiment 1 of the present invention.
Fig. 2

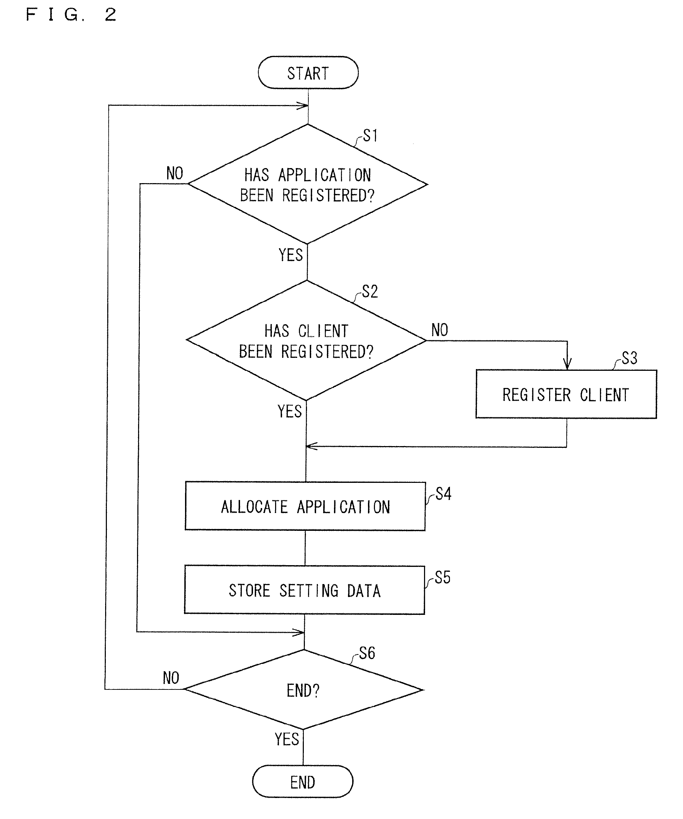

   Fig. 2 is a flow chart illustrating how a registration process is carried out by a setting registering section of a server section in the server-client system shown in Fig. 1.
Fig. 3

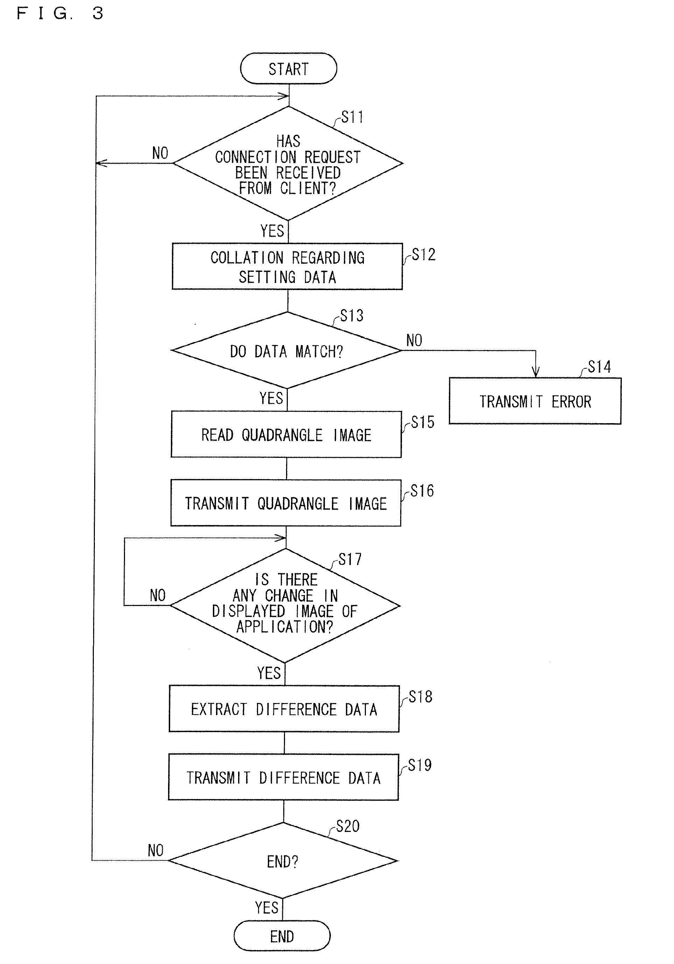

   Fig. 3 is a flow chart illustrating a data reading process carried out by a data reading section of the server section in the server-client system shown in Fig. 1.
Fig. 4

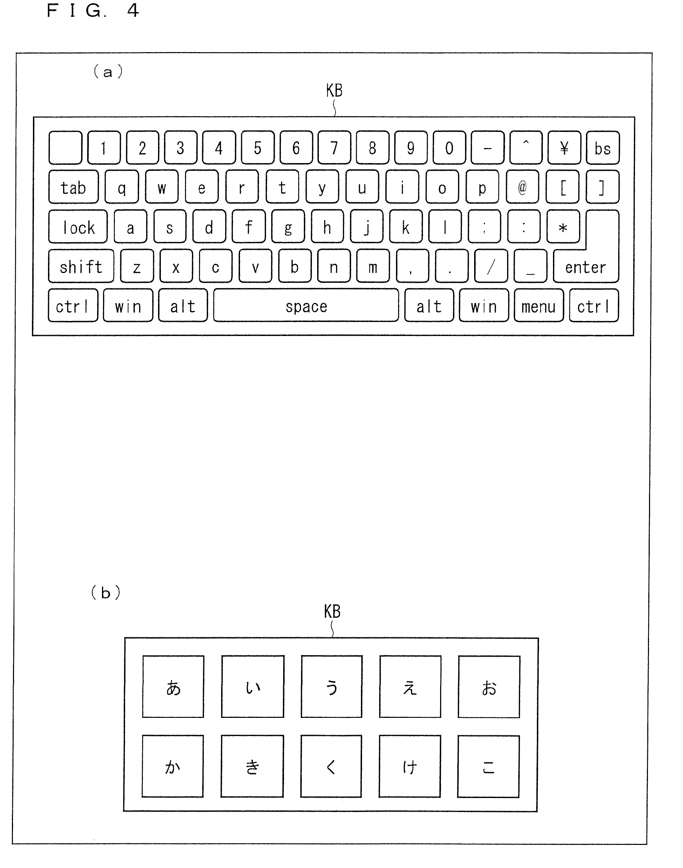

   Fig. 4 shows examples of a keyboard image displayed on a display of a client computer in the server-client system shown in Fig. 1. (a) of Fig. 4 is a view showing a keyboard image having a keyboard layout similar to that of a keyboard for use in a general personal computer. (b) of Fig. 4 is a view showing a keyboard image including only keys of part of *hiragana* (Japanese).
Fig. 5
   (a) of Fig. 5 is a view showing one example of an image displayed on a display of a server computer in the server-client system shown in Fig. 1. (b) of Fig. 5 is a view showing one example of an image displayed on the display of the client computer of the server-client system shown in Fig. 1.
Fig. 6

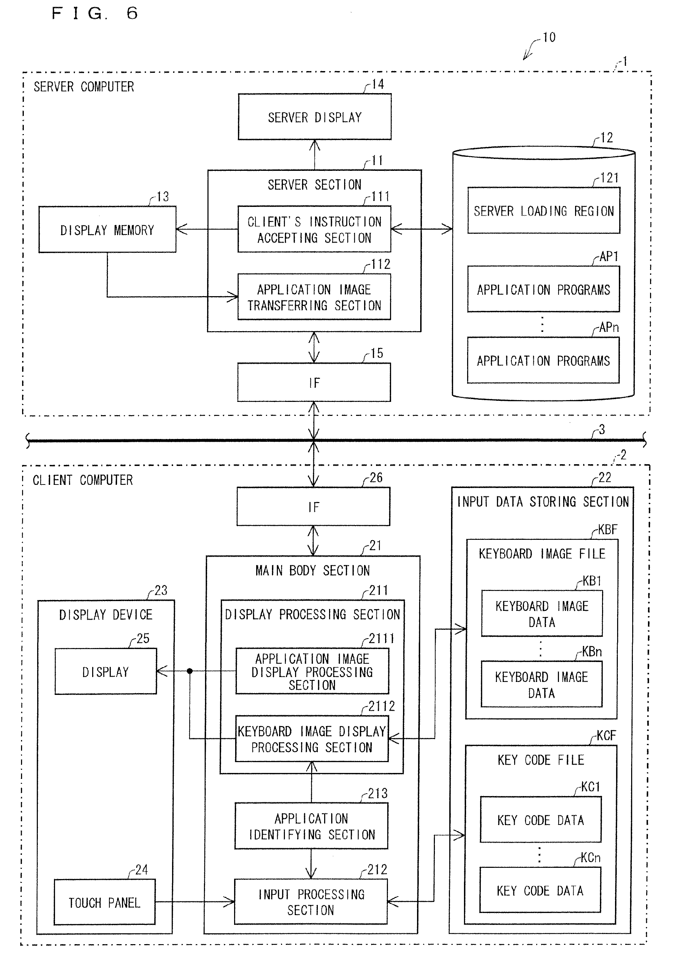

   Fig. 6 is a block diagram illustrating a configuration of a server-client system of Embodiment 2 of the present invention.
Fig. 7

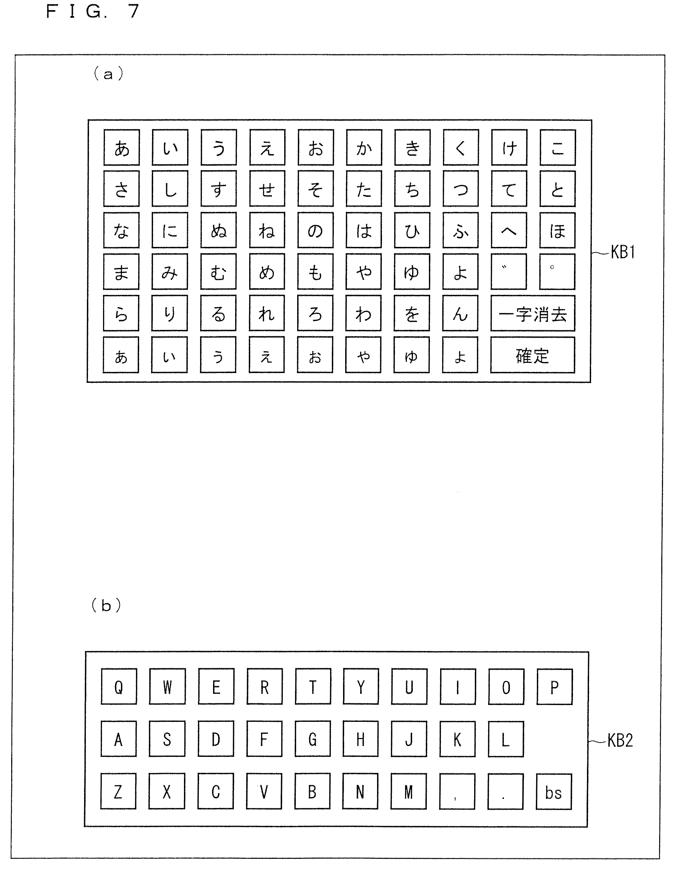

   Fig. 7 shows examples of a keyboard image displayed on a display of a client computer in the server-client system shown in Fig. 6. (a) of Fig. 7 is a view showing a keyboard image used to enter *hiragana.* (b) of Fig. 7 is a view showing a keyboard image used to enter alphabets.
Fig. 8
   (a) of Fig. 8 is a view showing one example of an application image requesting a user to enter *hiragana.* (b) of Fig. 8 is a view showing one example where the application image displays a keyboard image including only keys necessary to enter *hiragana.*
Fig. 9
   (a) of Fig. 9 is a view showing one example of an application image requesting a user to enter alphabets. (b) of Fig. 9 is a view showing one example where the application image displays a keyboard image including only keys necessary to enter alphabets.
Fig. 10
   (a) of Fig. 10 is a view showing one example of an application image requesting a user to enter numeric characters. (b) of Fig. 10 is a view showing one example where the application image displays a keyboard image including only keys to enter numeric characters.
Fig. 11
   Each of (a) and (b) of Fig. 11 is a view showing another example of the keyboard image displayed on the display of the client computer in the server-client system shown in Fig. 6.
Fig. 12
   (a) of Fig. 12 is a view showing one example of key code data indicative of correspondences between (i) keys of the keyboard image shown in (a) of Fig. 11 and (ii) key codes. (b) of Fig. 12 is a view showing one example of key code data indicative of correspondences between (i) keys of the keyboard image shown in (b) of Fig. 11 and (ii) key codes.

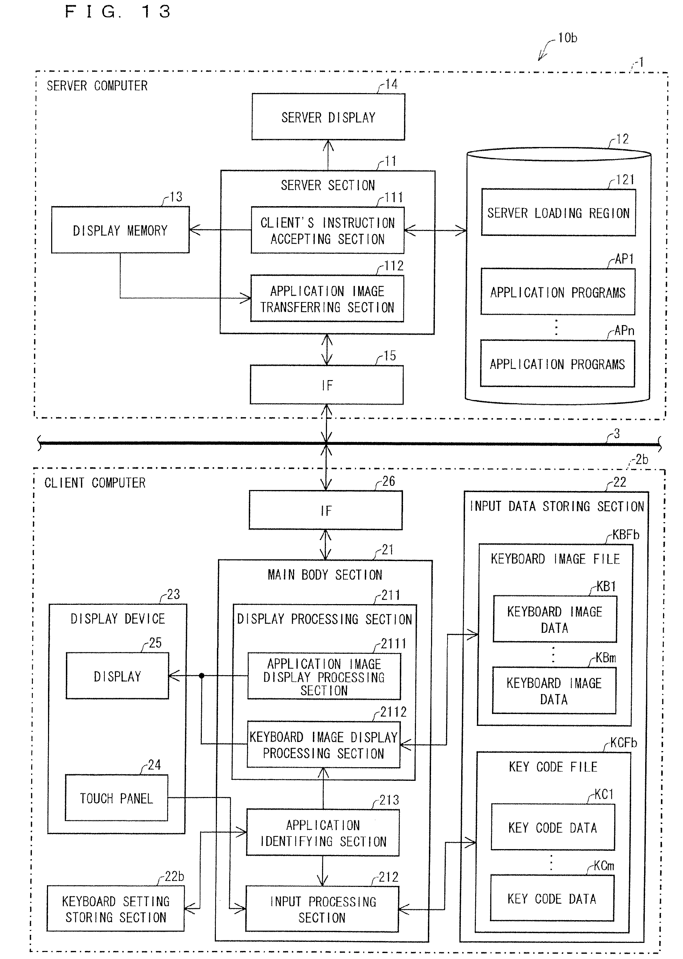

Fig. 13 Fig. 13 is a block diagram illustrating a configuration of a server-client system of Embodiment 3 of the present invention.
Fig. 14

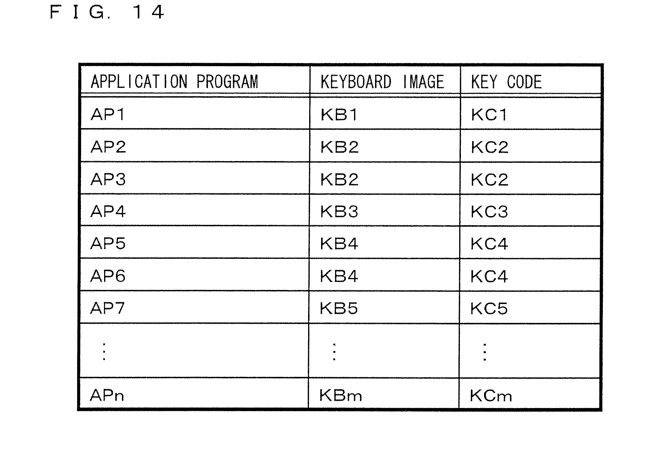

   Fig. 14 is a view showing one example of keyboard setting data.
Fig. 15

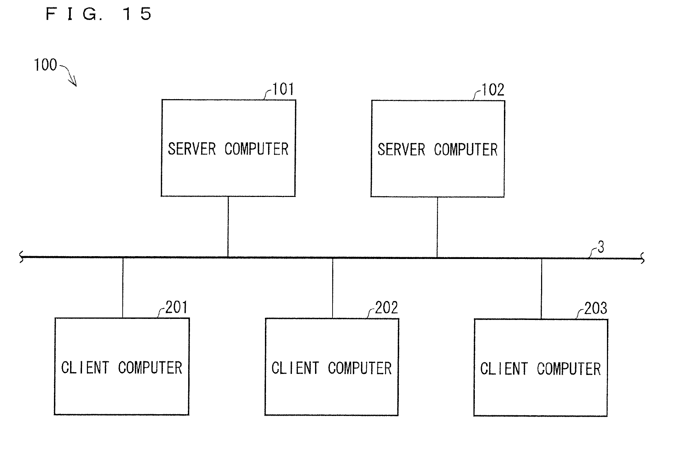

   Fig. 15 is a block diagram illustrating a configuration of a server-client system of Embodiment 4.
Fig. 16
   (a) of Fig. 16 is a view showing an image of an application program including a quadrangle image (selected image) that a client computer shown in Fig. 15 obtains from a server computer. (b) of Fig. 16 is a view showing a state where the quadrangle image thus obtained is displayed on a display of the client device.
Fig. 17
   (a) of Fig. 17 is a view showing another image of an application program including a quadrangle image that the client computer shown in Fig. 15 obtains from the server computer. (b) of Fig. 17 is view showing another state where the quadrangle image thus obtained is displayed on the display of the client device.
Fig. 18

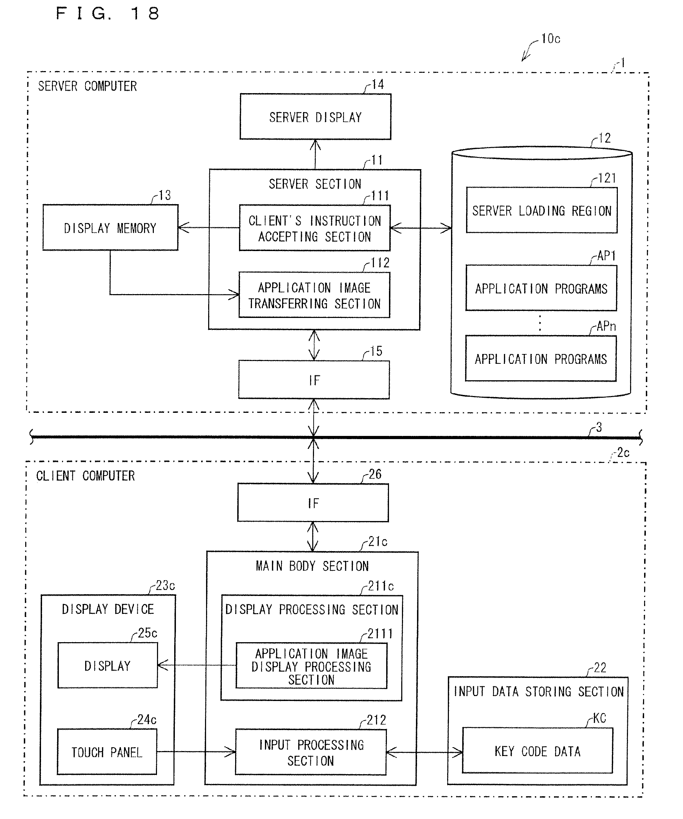

   Fig. 18 is a block diagram illustrating a configuration of a server-client system of Embodiment 5.
Fig. 19
   (a) of Fig. 19 is an elevation view of a display of a client computer in the server-client system shown in Fig. 18. (b) of Fig. 18 is an exploded view of a display device.
Fig. 20

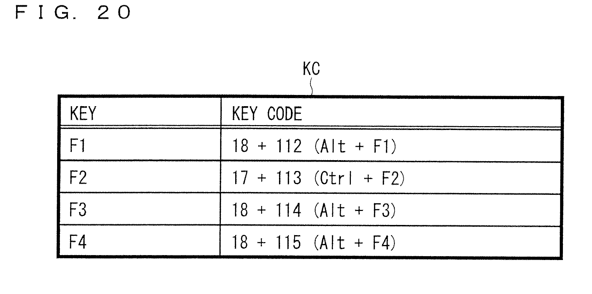

   Fig. 20 is a view showing one example of key code data stored in an input data storing section of the client computer in the server-client system shown in Fig. 18.
Fig. 21

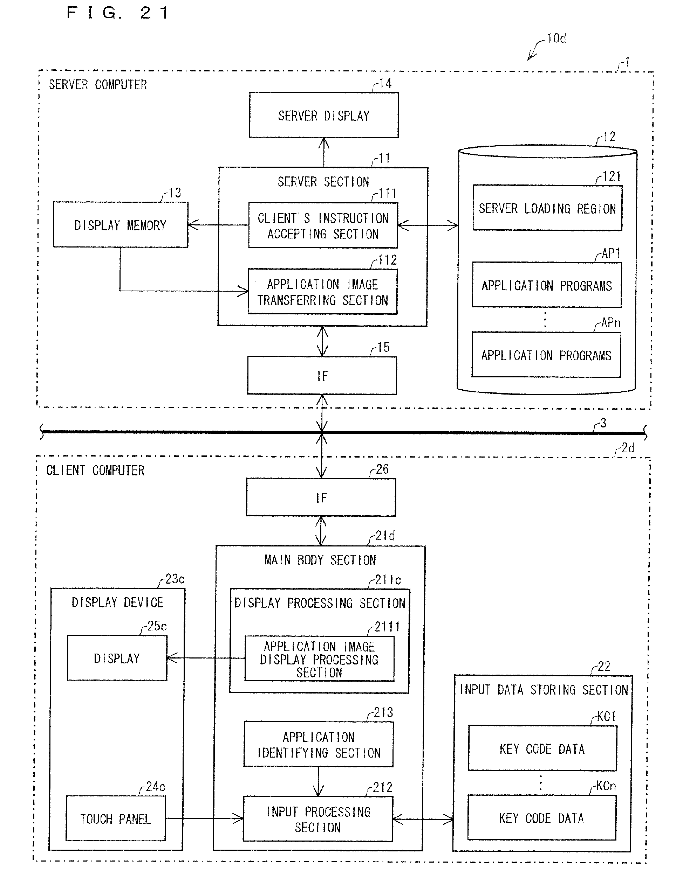

   Fig. 21 is a block diagram illustrating a configuration of a server-client system of a modification of Embodiment 5 of the present invention.
Fig. 22
   Each of (a) and (b) of Fig. 22 is a view showing one example of key code data stored in an input data storing section of a client computer in the server-client system shown in Fig. 21.

### Description of Embodiments

### [Embodiment 1]

The following will describe Embodiment 1 of the present invention with reference to Figs. 1 through 5.

Fig. 1 is a block diagram illustrating a configuration of a server-client system 10a of the present embodiment. The server-client system 10a includes a server computer (server device) 1a and a client computer (client device) 2a. In the present embodiment, the server computer 1a and the client computer 2a can be connected with each other via WAN such as the Internet, LAN such as Ethernet (Registered Trademark), or a high-speed serial communication such as USB (Universal Serial Bus: Registered Trademark).

First, a configuration of the server computer 1a will be described.

The server computer 1a includes a server section 11a, a storage device 12, a display memory 13, a server display 14, and a communication interface (shown as "IF" in drawings) 15. In the present embodiment, the server computer 1a is made of a personal computer.

In the present embodiment, the storage device 12 is made of a hard disc device, and stores n types (n is an integer) of application programs AP1 through APn. Further, the storage device 12 includes a server loading region 121.

The server loading region 121 is a region into which image data of an application program being to be displayed on the server display 14 of the server computer 1a is loaded. The server loading region 121 is provided so as to store data of an image of an application program which image is displayed on the server display 14 while the application program is running.

The display memory 13 is made of, e.g., a VRAM. Data of an application image is loaded into the display memory 13, and an application image transferring section 112 of the server section 11a reads out the image data and loads the image data into the server loading region 121. Consequently, it is possible to display the application image on the server display 14.

Further, the display memory 13 includes a client loading region 131, which is a region into which an application program being to be displayed on a display 25 of the client computer 2a is loaded. The client loading region 131 is divided into segmented regions R1, R2, ... , Rn provided for image data of respective application programs. Note that the segmented regions correspond to "storage regions" recited in the claims. With this configuration, image data of the respective application programs AP1 through APn are loaded into the segmented regions R through Rn, respectively. Namely, one(1) application program is loaded and stored in one(1) segmented region.

The storage device 12 stores a setting file SF1. The setting file SF1 includes an IP address, an ID, an application designation number, and quadrangle range data.

The application designation number is a number for designating an application program which is to be operated via the client computer 2a. The application designation number is associated with a start address of a segmented region into which data of an image of the designated application program is loaded. In this manner, the application designation number may be set so as to be associated with the segmented region. Alternatively, the application designation number may be set so as to directly designate the application program. To be more specific, because the quadrangle range data (described later) is set for the application program, allocating the quadrangle range data to the application designation number directly associates the application designation number with the application program.

Note that the application designation number corresponds to an "identification code" recited in the claims. The identification code is not limited to the number as described above. The identification code only needs to be a code for identifying a segmented region or an application program, and may be an alphabet(s) or the like.

The quadrangle range data is data indicative of a quadrangle range which is set in advance in order to specify a part of an image of the designated application program which part is to be displayed by the client computer 2a. The quadrangle range data includes, e.g., data of coordinates of two opposing angles of the quadrangle range.

The setting file SF1 is provided for each server computer 1a. The setting file SF1 may include a password.

The server section 11a is a functional block achieved by CPU's executing a server program. The server section 11a has a server function for allowing any of the application programs AP1 through APn to be operated via the client computer 2a. The server function provides, to the client computer 2a, data of an image used to operate an application program which is requested by the client computer 2a. In order to achieve this function, the server section 11a includes a client's instruction accepting section 111, an application image transferring section 112, and a setting registering section 113.

The client's instruction accepting section 111 is a functional block for accepting execution of an application program according to control information from the client computer 2a. When the server computer 1a executes an application program, the client's instruction accepting section 111 reads out the application program from the storage device 12, and loads data of an image of the application program into the server loading region 121. Further, at the time of booting of the server computer 1a, the client's instruction accepting section 111 reads out, from the storage device 12, an application program designated by an application designation number, and loads data of an image of the application program into the client loading region 131 in the display memory 13. Specifically, the client's instruction accepting section 111 operates as follows.

First, in a state where no application program is started yet, upon receiving from the client computer 2a an instruction to execute an application program, the server computer 1a reads out and executes, according to the instruction, the application program out of the application programs AP1 through APn which application program is designated by the instruction from the storage device 12. Then, the server computer 1a loads into the display memory 13 data of an execution image (hereinafter, referred to as an "application image") of the application program which is being executed. Note that how the client computer 2a gives the instruction to the server computer 1a will be described in detail later.

In a state where an application program is already started, the client's instruction accepting section 111 operates the application program according to an instruction. Then, the application image transferring section 112 reads out, from the display memory 13, at least part of an application image loaded in the display memory 13, and transmits the at least part of the application image to the client computer 2a via the communication interface 15. Consequently, in the client computer 2a, the application image thus transmitted is displayed on the display 25. As a result, by carrying out an input operation with respect to the application image, a user can control execution of the application program of the server computer 1a.

In a case where the server computer 1a is connected with a plurality of client computers 2a, the server computer 1a may automatically transmit an execution image of an application program to the client computers 2a. For example, in a case where the plurality of client computers 2a are executing, displaying, or viewing a single application of the server computer 1a, at least part of an application image is transmitted not only to a client computer 2a which has transmitted an instruction but also to the other client computers 2a which are executing, displaying, or viewing that application. This allows the client computer 2a which has transmitted the instruction and the other client computers 2a to be in the same state.

Further, data generated as a result of the client computer 2a's controlling the execution of the application program of the server computer 1a is stored in the storage device 12 in the server computer 1a. Namely, the client computer 2a does not store the data generated as a result of the execution of the application program. This makes it possible to prevent a user of the client computer 2a from leaking the data.

In response to a connection request from the client computer 2a, the application image transferring section 112 reads out, from the image data of the application program loaded into the display memory 13, data of a preset quadrangular region, and transmits the read data to the client computer 2a. Specifically, the application image transferring section 112 collates (i) an IP address and an ID transmitted from the client computer 2a together with the connection request with (ii) the IP address and the ID which are set in the setting file SF1. If (i) the IP address and the ID transmitted from the client computer 2a match (ii) the IP address and the ID in the setting file SF1, the application image transferring section 112 refers to the setting file SF1 identified by the IP address and the ID so as to read out the quadrangular region data.

Note that the ID may contain a code indicative of authority. Further, the application image transferring section 112 may change an application program operable via a client computer according to its authority.

The application image transferring section 112 identifies, according to the start address associated with the application designation number of the identified setting file SF1, a region of the client loading region 131 into which region the image data of the designated application program is loaded. Further, the application image transferring section 112 reads out, from the identified region, data of the quadrangle region defined by the quadrangle range data of the setting file SF1, the data ranging from the start address to an end address. Then, the application image transferring section 112 transfers, to the communication interface 15, the data of the quadrangle region thus read, so that the data of the quadrangle region is transmitted to the client computer 2a.

Alternatively, the application image transferring section 112 may directly read out, from the client loading region 131, the data of the quadrangle region according to the start address and the end address which are set in the setting file SF1. This eliminates the need for identifying the region into which the image data of the application program is loaded.

Further, every time the image data loaded into the client loading region 131 is changed by an operation carried out on the application program via the client computer 2a, the application image transferring section 112 reads out the data of the quadrangle region in order to transmit the data to the client computer 2a. In the reading, the application image transferring section 112 outputs, as difference data, only a part where the change is occurred due to the operation carried out on the application program via the client computer 2a. Transmitting the difference data to the client computer 2a makes it possible to reduce a transmission time as compared with a case where the image data of the quadrangle region is transmitted as it is.

The application image transferring section 112 corrects a position at which the quadrangle region is to be displayed. If a display screen of the display 25 of a display device 23 in the client computer 2a is smaller in size than a display screen of the server display 14 in the server computer 1a, there may occur a case where a selected quadrangle region is not displayed on the display 25, depending on a position of the quadrangle region. In order to avoid such a problem, the application image transferring section 112 corrects a coordinate value of data of the read quadrangle region so that the quadrangle region is displayed to be closer to, e.g., a lower left corner of the display screen of the display 25. Specifically, the application image transferring section 112 corrects, into (0, 0), coordinates of one (lower left corner) of two apexes defining the quadrangle region in the setting file SF1, and also corrects the other of the two apexes accordingly. As a result, the apex of the lower left corner of the quadrangle region coincides with a display origin (lower left corner) of the display 25. This makes it possible to significantly reduce the possibility of occurrence of a case where an image of a quadrangle range which is greatly far away from the display origin cannot be displayed on the display 25.

Incidentally, the application image transferring section 112 has a function of mouse emulation. In a case where (i) the server computer 1a employs, as an input device, a mouse connected via USB and (ii) the client computer 2a includes a mouse as an input device, it is possible to operate, by operating the mouse of the client computer 2a, an application program provided by the server computer 1a. However, in a case where the client computer 2a includes, as the input device, a device other than the mouse, input signals of the server computer 1a and the client computer 2a have respective different forms. Therefore, an operation carried out by the input device of the client computer 2a cannot be notified to the server computer 1a if the input signal of the client computer 2a is not given any modification. In order to address this, in a case where the client computer 2a includes a touch panel 24 as the input device, the application image transferring section 112 converts (i) an output signal of the touch panel 24 transmitted from the client computer 2a into (i) a form of an output signal of a mouse. Consequently, the server computer 1a processes the input operation carried out via the touch panel 24, while recognizing the input operation as the one carried out via the mouse connected via USB.

The setting registering section 113 sets, by creating the above-described setting file SF1, an IP address, an ID, an application designation number, and a quadrangle range data entered by the user. The setting registering section 113 registers, in the storage device 12, an application program that the server computer 1a can permit the client computer 2a to operate.

In order to create a setting file SF1, the setting registering section 113 displays, as a user interface for setting an IP address and an ID, a dialog box (not shown) into which the IP address and the ID are to be entered. If necessary, the dialog box may be provided with a box into which the password is to be entered.

Further, the setting registering section 113 displays, as a user interface for allocation of an application designation number and a quadrangle region (selected region), the dialog box (not shown) for the allocation. The allocation is carried out by use of the dialog box via which the quadrangle region is selected while an image of an application program designated by the application designation number is being displayed. The quadrangle region is selected by a conventional method such as moving a mouse while clicking the mouse.

The dialog box includes (i) a box into which an application designation number is to be entered, (ii) a file name box which displays a file name of the setting file SF1, and (iii) a quadrangle range box (selected range box) which displays a range of the selected quadrangle region. In creating a new setting file SF1, the file name box displays a file name which is automatically set. Whereas, in updating an already-created setting file SF1, the file name box displays a desired file name after the desired file name is selected from a list of file names. The range of the selected quadrangle region is defined by coordinates of two apexes (e.g., a lower left apex and an upper right apex) of the quadrangle region which face each other, and the quadrangle range box displays the coordinates of the two apexes. When the quadrangle range is determined, the setting registering section 113 carries out setting in the client loading region 131 so that (i) the quadrangle range data and (ii) a start address and an end address of data of the quadrangle region identified by the quadrangle range are set in combination.

The setting registering section 1 13 writes the IP address, the ID, the application designation number, and the quadrangle range into the setting file SF1 having the above file name, and stores the setting file SF1 in the storage device 12. In this manner, the setting registering section 113 registers the setting.

With the above configuration, the display 25 of the client computer 2a displays part of an image displayed on the server display 14 of the server computer 1a. Next, the following will describe details of a configuration of the client computer 2a.

As described above, a setting file SF2 stored in an input data storing section 22 is set for the client computer 2a, and is obtained from the server computer 1a.

The client computer 2a is a client device including a touch panel serving as an input device, and is made of (i) a display terminal such as a programmable display or (ii) a personal computer. Specifically, the client computer 2a includes a main body section 21a, the input data storing section 22, the display device 23, and a communication interface (in drawings, indicated as "IF") 26.

The display device 23 includes the display 25 and the touch panel 24. The display 25 displays (i) an application image transmitted from the server computer 1a and (ii) a keyboard image (described later). The display 25 is preferably a liquid crystal display (LCD) or a CRT (Cathode Ray Tube)-based display. The touch panel 24 is attached onto a front surface of the display 25, and is transparent so as to allow an image displayed on the display 25 to be viewed. The touch panel 24 is a position input device, and accepts an input operation carried out with respect to the image displayed by the touch panel 24. When an input operation is carried out with respect to the touch panel 24, the touch panel 24 generates a signal indicative of coordinates of a position of the touch panel 24 at which position the input operation has been carried out.

The input data storing section 22 is made of a hard disc device or an involatile memory, and stores the setting file SF2, once(1) keyboard image data KB, and one(1) key code data KC. The setting file SF2, the keyboard image data KB, and the key code data KC are set for the client computer 2a, and are obtained from the server computer 1a. The keyboard image data KB and the key code data KC are associated with each other so that (i) a key of the keyboard image to which key an input operation is carried out and (ii) a key code generated by an input processing section 212 correspond to each other. With this, in the server-client system 10a, a keyboard image display processing section 2112 displays one(1) type of keyboard image on the display 25, regardless of a type of application program executed by the server computer 1a. The input data storing section 22 stores the setting file SF2, which is set for the client computer 2a and is obtained from the server computer 1a.

The input data storing section 22 may be made of, e.g., a hard disc. However, according to the client computer 2a of the present embodiment, data generated by the server computer 1a's executing an application program is not stored in the input data storing section 22, but is stored in the storage device 12 of the server computer 1a.

The main body section 21a is a functional block achieved by CPU's executing a client program. The main body section 21a has a client function for operating an application program which is executed by the server computer 1a. The client function provides an environment for (i) displaying an image of a quadrangle region transmitted from the server computer 1a and (ii) operating an application program on the image through use of the touch panel 24, which serves as the input device. In order to achieve the client function, the main body section 21a includes a display processing section 211 and an input processing section 212.

The display processing section 211 is a functional block for displaying, on the display 25, (i) an application image within a quadrangle region which is transmitted from the server computer 1a in response to a request from the client computer 2a and (ii) a keyboard image stored in the input data storing section 22. Further, the display processing section 211 includes an application image display processing section 2111 and a keyboard image display processing section 2112.

Upon receiving data of an application image transmitted from the application image transferring section 112 of the server computer 1a via the communication interface 26, the application image display processing section 2111 loads, into a display memory (not shown), the data of the application image thus received. Consequently, the display 25 of the display device 23 displays an execution image of the application program which is being executed by the server computer 1a.

When the display 25 of the display device 23 displays the application image, the keyboard image display processing section 2112 reads out, if keyboard image data KB associated with the displayed application image is stored in the input data storing section 22, the keyboard image data KB from the input data storing section 22. Then, the keyboard image display processing section 2112 loads the keyboard image data KB into the display memory (not shown). As a result, the display 25 of the display device 23 displays a keyboard image so that the keyboard image overlaps the application image. Note that the position at which the keyboard image is displayed can be suitably set so that the keyboard image does not overlap the application image. Further, whether or not the keyboard image is to be displayed can be made selectable.

The display processing section 211 carries out a process for displaying, on the display 25 of the display device 23, data of a quadrangle region which is transmitted from the server computer 1a in response to a request from the client computer 2a. Further, upon receiving the above-described difference data which reflects a change occurred due to an operation carried out via the client computer 2a, the display processing section 211 updates, according to the difference data, the image of the quadrangle region which has been already displayed on the display 25.

Further, the display processing section 211 has a function as a scaler. In a case where a quadrangle region is not selected according to a size of a screen display of the display 25, the quadrangle region might be displayed extremely small or extremely big with respect to the screen display of the display 25. In order to avoid such a problem, an image of the quadrangle region is scaled up or down according to a display ability of the display 25. This makes it possible to display the quadrangle region in a size which is as close to the size of the display 25 as possible. Such the scaler function employs, e.g., a technique used in a television receiver or the like.

A user of the client computer 2a can control execution of the application program of the server computer 1a by carrying out, via the touch panel 24, an input operation with respect to the application image and the keyboard image displayed on the display 25 of the display device 23. Specifically, when an input operation is carried out with respect to the touch panel 24, the touch panel 24 generates a signal indicative of coordinates of the input position, and outputs the signal to the input processing section 212. For example, in a case where the input position corresponds to an operation button in the application image, the input processing section 212 transmits input position information to the server computer 1a as control information, the input position information being similar to the one which is generated in response to an input made with respect to the operation button via a mouse. Consequently, the client's instruction accepting section 111 of the server computer 1a executes a process according to the input position information associated with the operation button. On the other hand, in a case where the input position corresponds to a key of the keyboard image, the input processing section 212 identifies, according to the coordinates of the input position, the key to which the input operation has been carried out. Then, the input processing section 212 generates, by referring to the key code data KC, a key code corresponding to the key to which the input operation has been carried out, and transmits the key code to the server computer 1a as control information. Consequently, the client's instruction accepting section 111 of the server computer 1a executes a process according to the key code transmitted from the client computer 2a.

Namely, in the case where an input position indicates a key, the input processing section 212 of the client computer 2a of the present invention transmits a key code to the server computer 1a as control information. Whereas, in the case where an input position indicates an application image, the input processing section 212 transmits, to the server computer 1a, coordinate data indicative of the input position.

Further, when a user carries out, via the touch panel 24, an input operation to enter a request for an operation of an application program of the server computer 1a, the input processing section 212 outputs a request signal for the request. Further, the input processing section 212 reads out, from the setting file SF2 stored in the input data storing section 22, an IP address, an ID, and an application designation number, and outputs the IP address, the ID, and the application designation number together with the request signal.

The communication interface section 26 is a communication processing section for carrying out intercommunication with a device such as the server computer 1a connected with a network 3, and includes a socket for network communication. The communication interface section 26 receives, from the input processing section 212, a request for connection with the server computer 1a, and transmits the request to the server computer 1a. Further, the communication interface section transmits, to the main body section 21a of the client computer 2a, data received from the server section 11a (particularly, from the application image transferring section).

With reference to the flow chart shown in Fig. 2, the following will describe a registering process carried out by the setting registering section 113 in the server computer 1a of the server-client system 10a configured as above.

First, it is determined whether or not an operable application program has been registered (step S1). If such an application program has not been registered, the procedure proceeds to step S6.

If it is determined in step S1 that the operable application program has been registered, it is determined whether or not a client computer 2a which desires to operate the application program has been registered (step S2). If the client computer 2a has not been registered, the client computer 2a is registered (step S3). In this step, the setting registering section 113 registers an IP address and an ID, so that the client computer 2a is registered and the application program is allocated (step S4). In this step, the setting registering section 113 carries out allocation of the above-described application designation number and quadrangle region. Whereas, if it is determined in step S2 that the client computer 2a has been registered, the procedure proceeds to step S4.

The setting data registered as above is stored in the storage device 12 as a setting file SF1 (step S5). Subsequently, it is determined whether or not another registration process is to be carried out (step S6). If another registration process is not to be carried out, the procedure is ended. If another registration process is to be carried out, the procedure proceeds to step S1.

Next, with reference to the flow chart shown in Fig. 3, the following will describe (i) a process for reading data of a quadrangle region which process is carried out by the application image transferring section 112 in the server computer 1a and (ii) a data transmitting process carried out by the communication interface 15.

First, if a connection request is received in a standby state where reception of the connection request from the client computer 2a is waited for (step S11), collation is made regarding setting data which is used to identify the client computer 2a (step S12). In this step, the application image transferring section 112 collates (i) an IP address and an ID received from the client computer 2a with (ii) an IP address and an ID registered in the setting file SF1, respectively. As a result of the collation regarding the setting data, it is determined whether or not (i) the address and the ID received from the client computer 2a match (ii) the IP address and the ID registered in the setting file SF1, respectively (step S13). If (i) the address and the ID received from the client computer 2a do not match (ii) the IP address and the ID registered in the setting file SF1, error information is transmitted to the client computer 2a. According to the error information, the client computer 2a causes the display 25 of the display device 23 to display a message indicating that the connection request is rejected.

If it is determined in step S13 that (i) the address and the ID received from the client computer 2a match (ii) the IP address and the ID registered in the setting file SF1, respectively, data of a preset quadrangle region is read out from the display memory 13 (step S15). In this step, according to an application designation number and quadrangle range data read out from the setting file SF1, the application image transferring section 112 reads out, from the client loading region 131, image data of a desired quadrangle region. Then, the application image transferring section 112 transmits the read image data to the client computer 2a.

When the client computer 2a receives the image data, the display processing section 211 causes the display 25 to display, according to the image data, an image of the selected quadrangle region. In the client computer 2a, when a user operates, via the touch panel 24, the application program on the displayed image, operation information according to an input signal of the touch panel 24 is transmitted to the server computer 1a. In the server computer 1a, the application program is operated according to the operation information thus received, and a change occurred by the operation is reflected in the image data which is loaded into the client loading region 131.

After the image data of the quadrangle region is transmitted to the client computer 2a, it is determined whether or not a change as above exists (step S17). If it is determined that such the change exits, difference data corresponding to the change is extracted from the image data which is loaded into the client loading region 131 (step S18). Further, the difference data thus extracted is transmitted to the client computer 2a (step S19). In response to this, in the client computer 2a, according to the received difference data, the quadrangle image displayed on the display 25 is changed. Subsequently, it is determined whether or not a registration process is to be carried out (step S20). If the registration process is not to be carried out, the process for data reading and data transmission is ended. On the other hand, if the registration process is to be carried out, the procedure proceeds to step S11.

Next, the following will describe examples of the keyboard image and the application image in the server-client system 10a.

Each of (a) and (b) of Fig. 4 shows one example of a keyboard image KB displayed on the display 25. (a) of Fig. 4 is a view showing a keyboard image having a keyboard layout similar to a keyboard layout of a keyboard for use in a general personal computer. (b) of Fig. 4 is a view showing a keyboard image having only keys of part of *hiragana* (Japanese). In a case where a wide variety of key operations are necessary to control an application program which is executed by the server computer 1a, it is desirable to use a keyboard image as the one shown in (a) of Fig. 4. Whereas, in a case where only a specific key operation is necessary to control an application program which is executed by the server computer 1a, it is desirable to use a keyboard image having only necessary keys as the one shown in (b) of Fig.4.

(a) of Fig. 5 is a view showing one example of an image displayed on the server display 14 of the server computer 1a. (b) of Fig. 5 is a view showing one example of an image displayed on the display 25 of the client computer 2. As shown in (a) of Fig. 5, the server display 14 of the server computer 1a displays an image of an application which is being executed.

The application image transferring section 112 shown in Fig. 1 transmits, to the client computer 2a, image data corresponding to a region of the application image displayed on the server display 14 which region is surrounded by a quadrangle frame. As a result, as shown in (b) of Fig. 5, the display 25 of the client computer 2a displays an image of the region surrounded by the quadrangle frame.

The input data storing section 22 of the client computer 2a shown in Fig. 1 stores data of the keyboard image shown in (b) of Fig. 4. According to the application image displayed on the display 25, the keyboard image display processing section 2112 reads out, from the input data storing section 22, the data of the keyboard image which has been associated in advance with the application image, so that the display 25 displays the keyboard image as shown in (b) of Fig. 5.

Here, for example, if a touch input is carried out on a part of the application image displayed by the client computer 2a which part indicates " 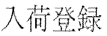 " ("arrival registration" in Japanese), the input processing section 212 shown in Fig. 1 transmits, to the server computer 1a, input position information indicative of the position at which the touch input has been carried out. In response to this, the client's instruction accepting section 111 of the server computer 1a carries out a process for switching the screen into a screen for arrival registration, according to the input position information, i.e., as recognizing that the touch input has been carried out on the part " 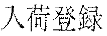 " ("arrival registration" in Japanese). Further, if a touch input is carried out on a part of the keyboard image displayed by the client computer 2a which part indicates " 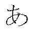 " ("a" in Japanese), the input processing section 212 shown in Fig. 1 refers to the key code data KC, and transmits a key code indicative of " 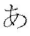 " ("a" in Japanese) to the server computer 1a as control information. Consequently, for example, in a case where the application image includes a character input field, the client's instruction accepting section 111 of the server computer 1a carries out, according to the key code, a process for displaying " 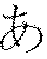 " ("a" in Japanese) in the character input field.

As described above, since the client computer 2a itself has the function for displaying the keyboard image, the server computer 1a does not need to transmit the data of the keyboard image to the client computer 2a. Accordingly, as compared with a configuration in which the server computer 1a transmits both of (i) the data of the application image and (ii) the data of the keyboard image, this configuration can reduce an amount of data which is to be communicated via the network 3, thereby enabling high-speed communication. Further, in a configuration in which the client computer 2a carries out switching of only the keyboard image, setting, on the keyboard, a special key such as a keyboard image switching button in advance makes it possible to switch the keyboard image from one to another by an operation carried out via the client computer 2a without communication with the server computer 1a.

In a configuration in which the keyboard image is transmitted from the server computer, the size of the keyboard image displayed by the client computer depends on the size of the display of the client computer. Therefore, depending on the size of the display, the keys of the keyboard image might be displayed too small or too big to carry out a proper input operation. Especially, if the keyboard image is displayed small and the display has a low resolution, it is difficult to carry out an input operation.

On the other hand, according to the present embodiment, the keyboard image which is to be displayed on the display is stored in the client computer 2a. Therefore, by suitably setting the size of the keyboard image according to the size of the display, it is possible to display the keyboard image in a size which does not hinder an input operation. Further, by limiting the number of keys of a keyboard image as in the keyboard image shown in (b) of Fig. 4, it is possible to display each key in a suitable size even if the size of the display is small.

Furthermore, (i) an input effect(s) such as XOR, scaling-up, scaling-down, and/or dot movement and/or (ii) a pop-up effect(s) such as alpha blending and/or overlapping may be set in the key(s) of the keyboard image. Thus, it is possible to individually design an optimum keyboard image according to a size and/or a resolution of a display.

Since the server-client system 10a of the present embodiment brings about the foregoing advantageous effects, the server-client system 10a of the present embodiment is applicable to various fields.

For example, in a site for manufacturing, instead of a configuration in which an entire image displayed by an administrator device is displayed by an operation terminal device which gives various instructions, only an image of a necessary minimum part to which an instruction is to be entered is selected and displayed by the terminal device. This can prevent a worker at the site from operating a part which is to be operated only by an administrator.

For another example, it is also possible to cut out, from a server computer 1b, only a necessary part of an image for a monitoring operation which image is displayed by, e.g., a programmable display, and to cause a client computer 2e to display the part thus cut out.

For further another example, the following configuration is also possible. From a server computer 1a, (i) a first image common to a plurality of client computers 2a and (ii) second images for the respective client computers 2a are selected. Then, the first image and a corresponding one of the second images are transmitted to each of the client computers 2a. In a correspondence education system or the like employing the above configuration, (i) a first part (question) which is to be transmitted to all members and (ii) second parts (answer) which are to be transmitted to respective individual members are cut out. Then, for each of the members, the first part and a corresponding one of the second parts are combined together, and the combined data is transmitted to a terminal of said each of the members. Alternatively, the above configuration can be applied to building management. In such a case, from an air conditioning control image which is created to control air conditioning of the entire building, (i) an image indicating information, etc. for all tenants and (ii) an air conditioning control image for each of the tenants can be read and combined, so that the combined data is transmitted to a terminal of the respective tenant.

For still another example, it is possible to select an image within a range which suits the size of the display screen of the display 25 and to cause the client computer 2a to display the selected image, since, according to the present embodiment, an arbitrary range is selected from image data loaded into the display memory 13 of the server computer 1a.

The present embodiment has dealt with the example where a range shaped in a quadrangle is selected as a range in which an operation is to be carried out via the client computer 2a. However, the present invention is not limited to this. Alternatively, a range having a shape other than a quadrangle may be selected, if possible.

The client loading region 131 of the display memory 13 may be provided in a different memory, for example, in a USB memory (external memory) connected with the server computer 1a or in a memory in the client computer 2a. However, in a configuration in which a region equivalent to the client loading region 131 is provided in the memory in the client computer 2a, (i) the operation for loading image data of an application program into the memory and (ii) the operation for reading out the image data from the memory are different from those described above. Specifically, in such a configuration, a memory loading section 114 instructs the main body section 21a to load the image data of the application program into the memory, and the application image transferring section 112 instructs the main body section 21a to read out the image data from the memory, so as to cause the display processing section 211 to carry out a display process.

### [Embodiment 2]

The following will describe Embodiment 2 of the present invention with reference to Figs. 6 through 12.

Embodiment 1 has dealt with the configuration in which the client computer displays one type of keyboard image. However, the present embodiment deals with a configuration in which a keyboard image displayed on a display is switched from one to another according to a state of an application image executed by a server computer. For convenience of explanation, only members having different functions from those explained in Embodiment 1 are given different signs. Further, members having the same functions as those explained in Embodiment 1 are given the same signs as Embodiment 1, and explanations thereof are omitted here.

Fig. 6 is a block diagram illustrating a configuration of a server-client system 10 of the present embodiment. The server-client system 10 is different from the server-client system 10a shown in Fig. 1 in the following points: A server computer 1 includes a server section 11 not including a setting registering section 113; A client computer 2 includes a main body section 21 including an application identifying section 213.

Further, a storage device 12 of the server computer 1 does not store the previously-described setting file SF1. Furthermore, an input data storing section 22 of the client computer 2 stores a keyboard image file KBF and a key code file KCF.

The keyboard image file KBF contains keyboard image data KB1 through KBn whose number is equal to the number of application programs AP1 through APn stored in the storage device 12 of the server computer 1. The keyboard image data KB1 through KBn are associated with the application programs AP1 through APn, respectively. Specifically, a keyboard image corresponding to the keyboard image data KB1 includes only a key used to carry out an execution process of the application program AP1. The same applies to keyboard images corresponding to all the keyboard image data following the keyboard image data KB1. For example, a keyboard image corresponding to the keyboard image data KBn includes only a key used to carry out an execution process of the application program APn.

Further, the key code file KCF includes key code data KC1 through KCn whose number is equal to the number of keyboard image data KB1 through KBn.

Each of the keyboard image data KB1 through KBn is data of a keyboard image which is to be displayed on a display 25. Each of the key code data KC1 through KCn is data indicative of a correspondence between (i) a key of a keyboard image and (ii) a key code corresponding to the key. When an input operation is carried out with respect to a keyboard image, an input processing section 212 (described later) of the main body section 21 refers to a corresponding one of the key code data KC 1 through KCn in order to generate a key code. Each of the keyboard image data KB1 through KBn and a corresponding one of the key code data KC 1 through KCn are associated with each other so that a key of the keyboard image to which key an input operation is carried out corresponds to a key code generated by the input processing section 212. Specifically, the key code data KC1 is data indicative of a correspondence between (i) a key included in the keyboard image corresponding to the keyboard image data KB1 and (ii) a key code. The same applies to all the key code data following the key code data KC 1. For example, the key code data KCn is data indicative of a correspondence between (i) a key included in the keyboard image corresponding to the keyboard image data KBn and (ii) a key code.

The application identifying section 213 has a function to determine whether or not an application program corresponding to an application image displayed on the display 25 is any of the application programs AP1 through APn.

The following will describe an example where a client's instruction accepting section 111 of the server computer 1 executes, according to an instruction from the client computer 2, the application program AP2 out of the application programs AP1 through APn. In this operation, the application image transferring section 112 transmits data of an application image of the application program AP2 to the client computer 2. An application image display processing section 2111 of the client computer 2 loads, into a display memory (not shown), the data of the application image thus received. Consequently, the application image of the application program AP2 is displayed on the display 25.

Further, the application image transferring section 112 of the server computer 1 transmits, to the client computer 2, identification information for identifying the application program AP2, together with the data of the application image. The application identifying section 213 of the client computer 2 identifies, according to the identification information, that the application program which is being executed by the server computer 1 is the application program AP2.

Upon identifying the application program, the application identifying section 213 generates keyboard selection information indicative of the keyboard image data KB2 associated with the application program AP2 thus identified, and outputs the keyboard selection information to the keyboard image display processing section 2112. Further, the application identifying section 213 generates key code selection information indicative of the key code data KC2 associated with the keyboard image data KB2 which is associated with the identified application program AP2, and outputs the key code selection information to the input processing section 212.

According to the keyboard selection information from the application identifying section 213, the keyboard image display processing section 2112 selects and reads out the keyboard image data KB2 from the keyboard image file KBF, and loads the keyboard image data KB2 into the display memory (not shown). Consequently, while the application image of the application program AP2 is being displayed on the display 25, a keyboard image corresponding to the keyboard image data KB2 associated with the application program AP2 is displayed on the display 25.

Further, according to the key code selection information from the application identifying section 213, the input processing section 212 selects the key code data KC2 as key code data which is to be referred to in order to generate a key code. Consequently, when an input operation is carried out with respect to the keyboard image corresponding to the keyboard image data KB2, the input processing section 212 can generate a key code corresponding to a key to which the input operation has been carried out.

As described above, the keyboard image corresponding to the keyboard image data KB2 includes only a key necessary to execute the application program AP2. This can prevent a mistake and mischief in operation caused by pressing of an unnecessary key, thereby making it possible to simplify an operation to execute the application program AP2.

With reference to Figs. 7 through 12, the following will describe examples of the keyboard image, the application image, and the key code data of the present embodiment.

Each of (a) and (b) of Fig. 7 illustrates one example of the keyboard image KB displayed on the display 25. (a) of Fig. 7 is a view showing the keyboard image KB1 used to enter *hiragana* (Japanese). (b) of Fig. 7 is a view showing the keyboard image KB2 used to enter alphabets.

For example, assume that key codes necessary to perform the execution process of the application program AP1 are only key codes for *hiragana,* and an input operation is to be carried out with respect to the application image of the application program AP1 shown in (a) of Fig. 8. In such the case, as shown in (b) of Fig. 8, the keyboard image KB1 including only keys necessary to enter *hiragana* is displayed. Further, assume that key codes necessary to perform the execution process of the application program AP2 are only key codes for alphabets, and an input operation is to be carried out with respect to the application image of the application program AP2 shown in (a) of Fig. 9. In such the case, as shown in (b) of Fig. 9, the keyboard image KB2 including only keys necessary to enter alphabets is displayed.

As described above, the keyboard image KB1 includes only the keys necessary to execute the application program AP1, and the keyboard image KB2 includes only the keys necessary to execute the application program AP2. This allows a user of the client computer 2 to easily carry out an input operation with respect to each of the keyboard images KB1 and KB2.

Further, for execution of one (1) application program, a plurality of different keyboard images may be displayed with respect to an application image which is displayed.

For example, assume that an execution image of the application program AP1 includes not only (i) an image requesting a user to enter *hiragana* such as the one shown in (a) of Fig. 8 but also (ii) an image requesting a user to enter numeric characters such as the one shown in (a) of Fig. 10. In such the case, as shown in (b) of Fig. 10, the keyboard image KB3, which includes only keys necessary to enter numeric characters, may be displayed when the image requesting the user to enter numeric characters is displayed on the display 25. In this way, displaying a different keyboard image according to an application image makes it easier to carry out an input operation with respect to a keyboard image.

As described above, according to the server-client system 10 of the present embodiment, it is possible to display, according to a type of an application program which is to be operated, a keyboard image customized for an execution process of the application program. Furthermore, even for a single application program having a plurality of application images, the server-client system 10 of the present embodiment can display a corresponding one of different keyboard images according to a displayed application image among the application images. This allows a user of the client computer 2 to easily carry out an input operation with respect to a keyboard image.

Note that a key included in a keyboard image displayed on the display 25 is not limited to a key included in a general keyboard device for use in a personal computer.

Each of (a) and (b) of Fig. 11 is a view showing another example of the keyboard image displayed on the display 25. (a) of Fig. 11 shows the keyboard image KB4, and (b) of Fig. 11 shows the keyboard image KB5. The keyboard image KB4 shown in (a) of Fig. 11 includes not only keys of *hiragana* but also keys which are not provided in a general keyboard device, e.g., a " 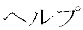 " ("help" in Japanese) key, a " 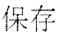 " ("save" in Japanese) key, a " 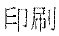 " ("print" in Japanese) key, etc. The keyboard image KB5 shown in (b) of Fig. 11 includes only keys which are not provided in a general keyboard device.
(a) of Fig. 12 is a view illustrating one example of the key code data KC4, which indicates correspondences between (i) the keys of the keyboard image KB4 shown in (a) of Fig. 11 and (ii) key codes. In the key code data KC4, the " 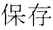 " ("save" in Japanese) key is associated with key codes "17 + 83" indicative of "Ctrl + S", and the " 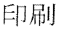 " ("print" in Japanese) key is associated with key codes "17 + 80" indicative of "Ctrl + P". In this way, associating a single key with a combination of plural key codes allows the input processing section to generate consecutive key codes by operating a single key. This makes it easier to carry out an input operation.
(b) of Fig. 12 is a view illustrating one example of the key code data KC5, which indicates correspondences between (i) the keys of the keyboard image KB5 shown in (b) of Fig. 11 and (ii) key codes. The key codes in the key code data KC5 are uniquely set in order to execute an application program. In order to carry out an operation for emergency stop of a device, it is necessary to transmit complicated key codes to the server computer 1. However, as shown in (b) of Fig. 12, associating the " 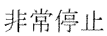 " ("emergency stop" in Japanese) key with key codes in advance allows a user to carry out the operation for " 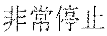 " ("emergency stop" in Japanese) by operating a single key.

Further, a single key may be associated with a key code indicative of a plurality of character strings in order to allow a user to enter the plurality of character strings by operating the single key.

As described above, according to the present embodiment, the following operation is carried out. In a case where (i) an application image executed by the server computer 1 is displayed by the client computer 2, which is a client device, and (ii) keyboard image data associated in advance with the application image is stored in the input data storing section 22 of the client computer 2, the keyboard image data is read out, and a keyboard image is displayed on the display 25 of the client computer 2. Namely, the client computer 2 itself has the function to display the keyboard image. Therefore, the server computer 1 does not need to transmit data of the keyboard image to the client computer 2. Accordingly, as compared with a configuration in which the server computer 1 transmits both (i) data of an application image and (ii) data of a keyboard image, this configuration can reduce an amount of data which is to be communicated via a network 3, thereby enabling high-speed communication. Further, this configuration eliminates a load on the server computer 1 which load is generated in transmitting the data of the keyboard image. This improves a speed at which the server computer 1 executes an application program. Furthermore, thanks to an increased communication speed, a speed for displaying an image of the display device 23 is also improved.

Moreover, by freely setting (i) a type of a key included in a keyboard image and (ii) a key code corresponding to the key, it is possible to use a keyboard image optimum for each application image. Note that a keyboard image associated with an application program may include a key which is not necessary to execute the application program.

### [Embodiment 3]

The following will describe Embodiment 3 with reference to Figs. 13 and 14.

In Embodiment 2, the application programs AP1 through APn are associated in a one-to-one relationship with the keyboard image data KB1 through KBn. However, the present embodiment deals with a configuration in which a single piece of keyboard image data is associated with a plurality of application programs. For convenience of explanation, only members having different functions from those explained in Embodiments 1 and 2 are given different signs. Further, members having the same functions as those explained in Embodiments 1 and 2 are given the same signs as Embodiments 1 and 2, and explanations thereof are omitted here.

Fig. 13 is a block diagram illustrating a configuration of a server-client system 10b of Embodiment 3. The server-client system 10b is different from the server-client system 10 shown in Fig. 6 in terms of a configuration of a client computer 2b. The client computer 2b is different from the client computer 2 shown in Fig. 1 in the following points: The client computer 2b further includes a keyboard setting storing section 22b; The client computer 2b includes an input data storing section 22 storing (i) a keyboard image file KBFb including m types (m is an integer smaller than n) of keyboard image data KB1 through KBm and (ii) a key code file KCFb including m types of key code files KC1 through KCm.

In the present embodiment, the keyboard setting storing section 22b is made of an involatile memory, as well as the input data storing section 22. The keyboard setting storing section 22b stores keyboard setting data indicative of a correspondence between an application program, keyboard image data, and key code data.

Fig. 14 is a view showing one example of the keyboard setting data. As shown in Fig. 14, the keyboard image data KB2 is associated with two application programs AP2 and AP3, and the keyboard image data KB4 is associated with two application programs AP5 and AP6. Note that the keyboard image data KB through KBm are associated with the key code data KC1 through KCm, respectively.

Upon receiving identification information for identifying an application program which is being executed by a server computer 1, an application identifying section 213 make an access to the keyboard setting storing section 22b so as to refer to the keyboard setting data. Based on this, the application identifying section 213 generates keyboard selection information indicative of keyboard image data associated with an application program thus identified, and outputs the keyboard selection information to a keyboard image display processing section 2112. Further, the application identifying section 213 generates key code selection information indicative of key code data associated with the keyboard image data which is associated with the identified application program, and outputs the key code selection information to the input processing section 212.

According to the keyboard selection information from the application identifying section 213, the keyboard image display processing section 2112 selects and reads out, from the keyboard image file KBFb, the keyboard image data associated with the application program which is being executed by the server computer 1, and loads the keyboard image data into a display memory (not shown). Consequently, a keyboard image corresponding to the keyboard image data associated with the application program which is being executed by the server computer 1 is displayed.

Further, in response to an input operation carried out with respect to the keyboard image corresponding to the keyboard image data, the input processing section 212 selects corresponding key code data according to the key code selection information from the application identifying section 213, so as to generate a key code corresponding to the key to which the input operation has been carried out.

In the present embodiment, each of (i) the keyboard image data and (ii) the key code data is fewer than the application programs. Therefore, it is possible to reduce an amount of keyboard image data stored in the client computer 2.

The present embodiment encompasses a configuration in which a single piece of keyboard image data is associated with different application programs. In such the configuration, a single keyboard image is commonly read out according to the plurality of application programs, for which the single piece of keyboard image data is set.

### [Embodiment 4]

The following will describe Embodiment 4 with reference to Figs. 15 through 17. The present embodiment deals with concrete examples of a transmission request, transmission, reception, and display of a quadrangle image.

Fig. 15 is a block diagram illustrating a configuration of a server-client system 100 of the present embodiment. The server-client system 100 includes two server computers 101 and 102 and three client computers 201, 202, and 203, (i) the server computers 101 and 102 and (ii) the client computers 201, 202, and 203 being connected with each other via a network 3. A concrete configuration of each of the server computers 101 and 102 is the same as that of the server computer 1a shown in Fig. 1. A concrete configuration of each of the client computers 201, 202, and 203 is the same as that of the client computer 2a shown in Fig. 1.

First, assume that the client computer 201 requests an operation of an application program corresponding to an image 301 shown in (a) of Fig. 16, among images loaded into a client loading region 131 of the server computer 101. For the image 301, quadrangle range data indicative of a quadrangle region X1 positioned closer to an upper left corner of the image 301 is set in a setting file SF1. If IP addresses and IDs match as described previously and consequently the server computer 101 receives the above request, the server computer 101 transmits data of the quadrangle region X1 to the client computer 201. Consequently, as shown in (b) of Fig. 16, an image of the quadrangle region X1 is displayed on a display 25 of the client computer 201.

Next, assume that the client computer 201 requests an operation of an application program corresponding to an image 302 shown in (a) of Fig. 17, among images loaded into a client loading region 131 of the server computer 102. For the image 302, quadrangle range data indicative of a quadrangle region X2 positioned closer to an upper right corner of the image 302 is set in a setting file SF1. If IP addresses and IDs match as described previously and consequently the server computer 102 receives the above request, the server computer 102 transmits data of the quadrangle region X2 to the client computer 201. At this time, a connection destination of the client computer 201 is switched from the server computer 101 to the server computer 102. Consequently, as shown in (b) of Fig. 17, an image of the quadrangle region X2 is displayed on a display device 23 of the client computer 201.

As described above, according to the server-client system 100 of the present embodiment, upon receiving a connection request from a client computer 2a, a server computer identifies and reads out, according to an application designation number and quadrangle range data set in advance in a setting file SF1, a quadrangle region from image data of a designated application program, and transmits the quadrangle region to the client computer 2. Consequently, the client computer 2a can operate, only within a range of the selected quadrangle region, the desired application program, whose image data of the quadrangle region is received by the client computer 2a and is loaded into the client loading region 131.

As a result, a range of an application program in which range the application program is operable via the client computer 2a can be limited to a necessary minimum range. In order to further enhance the effect of limiting the operable range, defining in advance a part selectable by the setting registering section 113 is a good way. For example, a main part of a window is defined as being selectable, and a control part of the window is defined as not being selectable. With this configuration, it is possible to easily avoid (i) a case where the application program is improperly ended by the client computer 2a and (ii) a case where the application program is changed into an undesirable state by the client computer 2a.

Further, according to the present embodiment, even in a case where image data loaded into a server loading region 121 of a storage device 12 is displayed on a server display 14 in the server computer 1a, an operation carried out via the client computer 2a would not affect an application program corresponding to the image data.

Further, a single application designation number may be associated with different IDs. This makes it possible to operate a single application program via a plurality of client computers 2a to each of which the single application designation number is set. Consequently, a quadrangle image reflecting an operation carried out via each of the client computers 2a is displayed by the client computer 2a.

Furthermore, according to the present embodiment, images of a plurality of application programs are loaded into the client loading region 131. Therefore, by increasing the size of the display memory 13 so as to expand the client loading region 131, it is possible to increase the number of application programs which can be designated by the client computer 2a.

### [Embodiment 5]

The following will describe Embodiment 5 of the present invention with reference to Figs. 18 through 22. The present embodiment deals with a configuration in which permanent keys are provided in the surrounding of an image display region of a display of a display device, instead of a configuration which displays a keyboard image on the display of the display device. For convenience of explanation, only members having different functions from those explained in Embodiment 1 are given different signs. Further, members having the same functions as those explained in Embodiment 1 are given the same signs as Embodiment 1, and explanations thereof are omitted here.

Fig. 18 is a block diagram illustrating a configuration of a server-client system 10c of Embodiment 5. The server-client system 10c is different from the server-client system 10 shown in Fig. 6 in terms of a configuration of a client computer 2c. The client computer 2c corresponds to the client computer 2 shown in Fig. 6 configured such that (i) the main body section 21 and the display device 23 are respectively replaced with a main body section 21 c and a display device 23c including a display 25c and a touch panel 24c and (ii) the input data storing section 22 stores only key code data KC. The main body section 21c corresponds to the main body section 21 shown in Fig. 6 configured such that the display processing section 211 is replaced with a display processing section 211c including only an application image display processing section 2111.
(a) of Fig. 19 is an elevation view of the display device 23c of the client computer 2c. (b) of Fig. 19 is an exploded view of the display device 23c. As shown in (b) of Fig. 19, the display device 23c includes (i) a housing H including a display 23p, (ii) a touch panel 24c overlapping the housing H, and (iii) a top surface sheet 27 overlapping the touch panel 24c.

An area of the touch panel 24c is almost equal to that of the top surface sheet 27. On the other hand, an area of the display 23p is smaller than those of the touch panel 24c and the top surface sheet 27. A part of the top surface sheet 27 which part overlaps the display 23p when viewed from the front is transparent (hereinafter, this part is referred to as a "transparent part 27a"). Whereas, a part of the top surface sheet 27 which part does not overlap the display 23p is not transparent. The part which is not transparent is provided with permanent keys (hereinafter, referred to as "fixed keys"). An image displayed on the display 23p is viewed through the transparent part 27a. The top surface sheet 27 is not limited to any particular kind, as long as it has elasticity and allows the touch panel 24c, which is provided on a backside of the top surface sheet 27, to be operated.

When the client computer 2c shown in Fig. 18 receives data of an application image which is being executed by a server computer 1, the application image display processing section 2111 1 displays, on the display 25c, the application image thus received. In response to an input operation carried out with respect to an operation button on the application image, the input processing section 212 transmits input position information to the server computer 1 in the same manner as in a case where an input is entered with respect to the operation button via a mouse. Consequently, a client's instruction accepting section 111 of the server computer 1 executes a process according to the input position information associated with the operation button.

Further, when an input operation is carried out with respect to any of the fixed keys shown in (a) and (b) of Fig. 19, the input processing section 212 refers to the key code data KC so as to generate a key code corresponding to the key to which the input operation has been carried out. Then, the input processing section 212 transmits the key code to the server computer 1 as control information. In response to this, the client's instruction accepting section 111 of the server computer 1 executes a process according to the key code transmitted from the client computer 2c. Consequently, a user can carry out an input operation with respect to the application image via the touch panel 24c. Further, the user can control execution of the application program of the server computer 1 by carrying out an input operation with respect to any of the fixed keys shown in (a) and (b) of Fig. 19.

Fig. 20 is a view showing one example of the key code data KC stored in the input data storing section 22 shown in Fig. 18. The key code data KC indicates correspondences between (i) the fixed keys shown in (a) and (b) of Fig. 19 and (ii) key codes. For example, when an input operation is carried out with respect to an "F1" key, the input processing section 212 shown in Fig. 18 generates key codes "18" and "112", which correspond to an "Alt + F1" operation of a general-purpose keyboard.

As described above, in the present embodiment, the server computer 1 does not need to transmit data of a keyboard image to the client computer 2c, as well as in the previously-described Embodiments 1 and 2. This can reduce an amount of data communicated via a network 3. Further, the configuration of the present embodiment includes the fixed keys provided in the surrounding of the display panel 23p, instead of a keyboard image displayed therein. Therefore, according to the present embodiment, operability is not impaired by a keyboard image displayed so as to overlap an application image.

Further, key codes associated with the fixed keys may be different according to an application program being to be executed by the server computer 1. This makes it possible to carry out different operations for respective application programs, even if the fixed keys of the client computer have a single hardware configuration.

Furthermore, setting a plurality of key codes to a single key simplifies operation of the keys.

Fig. 21 is a block diagram illustrating a configuration of a server-client system 10d of a modification of the present embodiment. The server-client system 10d is different from the server-client system 10b shown in Fig. 18 in a configuration of a client computer 2d. The server-client system 10d corresponds to the server-client system 10c shown in Fig. 18 configured such that the client computer 2c is replaced with the client computer 2d. The client computer 2d is different from the client computer 2c in the following points: A main body section 21d further includes an application identifying section 213; An input data storing section 22 stores a plurality of key code data KC1 through KCn.

The key code data KC1 through KCn are associated with application programs AP1 through APn, respectively, which are stored in a server computer 1. Specifically, the key code data KC1 includes only a key code used to carry out an execution process of the application program AP1. The same applies to all the key code data following the key code data KC1. For example, the key code data KCn includes only a key code used to carry out an execution process of the application program APn.

Each of (a) and (b) of Fig. 22 is a view showing one example of the key code data stored in the input data storing section 22. (a) of Fig. 22 shows the key code data KC1, and (b) of Fig. 22 shows the key code data KC2. Note that each of the key code data KC1 and KC2 shown therein omits indication of correspondences between (i) fixed keys other than function keys F1 through F4 and (ii) key codes.

For example, while the server computer 1 is executing the application program AP2 and an application image display processing section 2111 is displaying, on a display 25c, an application image of the application program AP2, the application identifying section 213 identifies that an application program which is being executed by the server computer 1 is the application program AP2, according to identification information for identifying the application program AP2 which identification information is transmitted from the server computer 1 together with data of the application image. Subsequently, the application identifying section 213 generates key code selection information indicative of the key code data KC2 associated with the application program AP2 thus identified, and outputs the key code selection information to an input processing section 212. According to the key code selection information, the input processing section 212 selects the key code data KC2 as key code data which is to be referred to in order to generate a key code. Thus, in response to an input operation carried out with respect to any of the fixed keys, the input processing section 212 can generate a key code corresponding to the fixed key to which the input operation has been carried out.

By changing, in this manner, a key code associated with a fixed key according to an application program which is being executed, it is possible to improve operability of an application program. Note that a correspondence between a fixed key and a key code may be switched from one to another according to (i) an application image of a single application program or (ii) a state of the application program.

The fixed keys exemplified in the present embodiment are the function keys, the numeric keys, etc. In addition to them, the fixed keys may include a key which is not provided in a general keyboard device, for example, a " 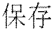 " ("save" in Japanese) key and/or a " 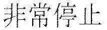 " ("emergency stop" in Japanese) key. Further, a plurality of top surface sheets 27 having displays of respective different fixed keys may be used. This makes it possible to freely design the number of and a position of keys.

### [Summary of Embodiments]

In each embodiment, the previously-described server program can be stored in a storage medium configured to be separable from the server computer 1, and can be installed in the server computer 1 via the storage medium. Further, in each embodiment, the previously-described client program can be stored in a storage medium configured to be separable from the client computer 2, and can be installed in the client computer 2 via the storage medium.

Each of the above storage media is a computer readable storage medium, suitable examples of which encompass tapes such as such as magnetic tapes and cassette tapes; magnetic disks such as flexible disks and hard disks; optical discs such as CD-ROM, MO, MD, and DVD; and cards such as IC cards (including memory cards) and optical cards. Further, the program medium may be a medium supporting a program in a fixed manner, for example, a semiconductor memory such as a mask ROM, an EPROM, an EEPROM, or a flash ROM.

In a case where the server computer 1 and the client computer 2 are connectable with a communication network, e.g., the Internet, the server computer 1 and the client computer 2 may download a server program and a client program, respectively, over the communication network. However, in the case where the server computer 1 and the client computer 2 download the server program and the client program, respectively, over the communication network, programs for downloading are preferably the ones stored in the server computer 1 and the client computer 2 in advance or the ones installed from another storage media.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

According to a server-client system of the present invention, images of application programs of a server device are loaded into respective specific loading regions in the server device. Further, in response to a request from a client device, a preselected quadrangle region is read out from an image of a predesignated application program among the application programs loaded into a display memory, and the quadrangle region is transmitted to the client device. Therefore, it is possible to cause the client device to display only an image of the quadrangle region independently of the image of the application program displayed by the server device, thereby limiting an operable region of the application program to the quadrangle region. Thus, this server-client system is suitably used to limit a range of the application program in which range the application program is operable via the client device.

Furthermore, the present invention is applicable not only to server-client systems for general use but also to server-client systems for industrial use, e.g., to the one provided with a programmable display as a thin client.

### Reference Signs List

1, 1b Server computer (server device)
2, 2a through 2e Client computer (client device)
3 Network
10, 10a through 10e Server-client system
11, 11b Server section
12 Storage device
13 Display memory (image data storing means)
15 Communication interface section (transmitting means)
22 Input data storing section (keyboard image storing means)
23, 23b Display device
23p Display (display region)
24, 24b Touch panel (input means)
26 Communication interface section
27 Top surface sheet (keyboard display member)
112 Application image transferring section (reading means)
113 Setting registering section (setting means)
121 Server loading region
131 Client loading region
2111 Application image display processing section (application image display processing means)
2112 Keyboard image display processing section (keyboard image display processing means)
212 Input processing section (input processing means)
AP1 through APn Application program
KB, KB1 through KBn Keyboard image data (keyboard image)
KC, KC through KCn Key code data (key code)
R1 through Rn Segmented region (storage region)

## Claims

1. A server device for transmitting image data of an application program to at least one of one or more client devices in response to a request from said at least one of the one or more client devices, and accepting an instruction to operate the application program which instruction is generated by a control operation carried out via said at least one of the one or more client devices, the server device comprising:
reading means for reading out image data of an application program from a corresponding one of a plurality of storage regions in image data storing means, the plurality of storage regions storing image data of respective different application programs; and
transmitting means for transmitting the read image data to at least one of the one or more client devices which is a transmission destination,
each of the plurality of storage regions being not a server storage region for storing image data used by the server device to carry out a display.

2. The server device as set forth in claim 1, wherein:
the reading means reads out the image data according to an identification code for identifying at least one of (i) the application program loaded into the corresponding one of the plurality of storage regions and (ii) the corresponding one of the plurality of storage regions;
the identification code is associated with said at least one of the one or more client devices, to which the image data is to be transmitted; and
the transmitting means transmits, according to the identification code, the image data to said at least one of the one or more client devices.

3. The server device as set forth in claim 1, further comprising:
setting means for setting, as a selected range, at least part of the image data of the application program,
the transmitting means transmitting the selected range to said at least one of the one or more client devices.

4. A server-client system, comprising:
one or more client devices;
one or more server devices each of which is recited in any one of claims 1 through 3; and
image data storing means for including a plurality of storage regions each storing at least part of image data of an application program of a corresponding one of the one or more server devices,
the reading means reading out, in response to a request from at least one of the one or more client devices, image data stored in a corresponding one of the plurality of storage regions in the image data storing means.

5. The server-client system as set forth in claim 4, wherein:
the one or more client devices are connected, via a network, with one of the one or more server devices executing an application program; and
each of the one or more client devices comprises:
a display including a display region for displaying an image;
input means for accepting an input operation carried out with respect to the image displayed;
application image displaying means for (i) receiving, from the one of the one or more server devices, an execution image of the application program which is being executed by the one of the one or more server devices and (ii) displaying the execution image on the display;
input processing means for transmitting, to the one of the one or more server devices according to the input operation, control information for controlling execution of the application program;
a keyboard image storing section for storing a keyboard image having a predetermined keyboard layout; and
keyboard image display means for (i) reading out the keyboard image from the keyboard image storing section and (ii) displaying the keyboard image on the display; and
when an input operation is carried out with respect to a key of the keyboard image displayed on the display, the input processing means generates a key code corresponding to the key to which the input operation has been carried out, and transmits the generated key code to the one of the one or more server devices as the control information.

6. The server-client system as set forth in claim 5, wherein:
the keyboard image storing section stores a plurality of keyboard images having respective different keyboard layouts;
each of the plurality of keyboard images is associated with at least one of execution images of the application programs which are to be executed by the one or more server devices; and
the keyboard image display means reads out, from the keyboard image storing section, a keyboard image among the plurality of keyboard images which is associated with an execution image of an application program which is being displayed by the application image displaying means, and displays the read keyboard image on the display.

7. A server program for causing a computer to function as
(i) a server device recited in any one of claims 1 through 3 or
(ii) a server device included in a server-client system recited in any one of claims 4 through 6, the server program causing the computer to function as the reading means and the transmitting means.

8. A computer readable storage medium storing a server program recited in claim 7.
